# EUROPÄISCHE PATENTANMELDUNG

(11) **EP 4 353 990 A1**
(43) Veröffentlichungstag der Anmeldung: **17.04.2024**
(21) Anmeldenummer: 23200741.9
(22) Anmeldetag: 29.09.2023
(51) Int. Cl.: F16G 11/10, G09F 3/03

(54) **SEILDURCHFÜHRUNG ZUM SICHERN EINES SEILS GEGEN DURCHRUTSCHEN MIT ROLLBAREM KLEMMELEMENT MIT ENTLANG EINER ROTATIONSACHSE ZUR MITTE HIN KONVEX NACH AUSSEN GEWÖLBTER UMFANGSFLÄCHE SOWIE SCHLAUFENBILDNER UND DRAHTSEILHALTER**

(30) Priorität: 30.09.2022 DE 102022125346
(71) Anmelder: Reutlinger GmbH, 60437 Frankfurt am Main (DE)
(72) Erfinder: Volberg, Jürgen, 53844 Troisdorf (DE); Schultheis, Michael, 63322 Rödermark (DE); Jovanovic, Sa a, 60386 Frankfurt am Main (DE)
(74) Vertreter: Keil & Schaafhausen Patentanwälte PartGmbB

(57) **Zusammenfassung**

Die vorliegende Erfindung betrifft eine Seildurchführung (10a, 10b), insbesondere für einen Schlaufenbildner (1, 100) oder Drahtseilhalter (200), zum Durchführen eines Seils (S1, S2) durch ein Grundmodul (2) und zum Sichern des Seils (S1, S2) gegen Durchrutschen entlang einer Sperrrichtung (Rs), umfassend einen Seilkanal (11a, 11b) zum Hindurchstecken des Seils (S1, S2) und ein Schlittenmodul (30) mit einem Schlitten (31), welcher durch das Grundmodul (2) schräg zu dem Seilkanal (11a, 11b) verschiebbar geführt ist. Das Schlittenmodul (30) umfasst ein rollbares Klemmelement (32, 232) zum Einklemmen des Seils (S1, S2) zwischen dem rollbaren Klemmelement (32, 232) und einer Gegenwand (16) des Seilkanals (11a, 11b). Der Schlitten (31) führt das rollbare Klemmelement (32, 232) entlang seines Verschiebewegs (33) mit. Zur Gewährleistung einer einfachen Bedienung und hoher Sicherheit ist eine Umfangsfläche (32a, 232a) des rollbaren Klemmelements (32, 232), die eine Rotationsachse (Ro) des rollbaren Klemmelements (32, 232) umgibt, entlang der Rotationsachse (Ro) zur Mitte des rollbaren Klemmelements (32, 232) hin konvex nach außen gewölbt ist.

## Beschreibung

Die vorliegende Erfindung betrifft eine Seildurchführung, insbesondere für einen Schlaufenbildner, zum Durchführen eines Seils durch ein Grundmodul und zum Sichern des Seils gegen Durchrutschen entlang einer Sperrrichtung. Die vorliegende Erfindung betrifft ferner einen Schlaufenbildner mit zwei Seildurchführungen und einen Drahtseilhalter mit einer Seildurchführung.

Schlaufenbildner werden verwendet, um aus einem Seil (typischerweise einem Drahtseil) eine Schlaufe zu bilden. Dazu wird ein freies Ende des Seils ein erstes Mal durch den Schlaufenbildner geführt, sodass ein Teilstück des Seils mit dem freien Ende des Seils aus dem Schlaufenbildner heraussteht. Das freie Ende wird dann erneut durch den Schlaufenbildner geführt. Ein Teilbereich des Seils zwischen der ersten Seildurchführung und der zweiten Seildurchführung bildet eine Schlaufe aus. Der Schlaufenbildner verhindert, dass sich die Schlaufe unbeabsichtigt vergrößert oder gar löst.

Schlaufenbildner können dazu genutzt werden, Gegenstände mit Drahtseilen abzuhängen. Sie finden unter anderem Verwendung in der Veranstaltungstechnik und im Messebau.

Bei den Seildurchführungen bekannter Schlaufenbildner kommt es vor, dass sich die Sperrung des Seils gegen das Durchrutschen entlang der Sperrrichtung nur schwer lösen lässt. Bei vielen Varianten ist der Einsatz von Werkzeug notwendig. Oft hängen Schlaufenbildner optisch nicht lotrecht, wenn sie bestimmungsgemäß eingesetzt werden. Das wird als wenig ästhetisch und daher nachteilhaft betrachtet, insbesondere in Anwendungen wie dem Messebau, wo der optische Eindruck eine gewichtige Bedeutung hat. Zudem ist die Bedienung wenig gleichförmig, wenn sich die Ausrichtung ändert.

Ein Drahtseilhalter dient dazu, ein daran befestigtes Element an einem Drahtseil zu fixieren. Bei herkömmlichen einstellbaren Drahtseilhaltern wird das Drahtseil durch eine Klemmmechanik gegen Durchrutschen entlang der Sperrrichtung festgeklemmt. Im Allgemeinen sind die zu haltenden Elemente unterschiedlich schwer. Daher sind Drahtseilhalter mit verschiedene Seildurchmessern im Einsatz. Entsprechend existieren unterschiedliche Typen von Drahtseilhaltern, die jeweils für bestimmte Seildurchmesser optimiert sind und für unterschiedliche Arbeitslasten ausgelegt sind. So kann die Arbeitslast variieren, aber auch (wie oben beschrieben) der Winkel, unter dem die Kraft in den DSH eingeleitet wird, unterschiedlich sein.

Die Aufgabe der vorliegenden Erfindung besteht darin, eine Seildurchführung, insbesondere für einen Schlaufenbildner bzw. einen Drahtseilhalter, mit einfacher Bedienung und hoher Sicherheit zu schaffen.

Die obige Aufgabe wird gelöst durch eine Seildurchführung, insbesondere für einen Schlaufenbildner bzw. einen Drahtseilhalter, zum Durchführen eines Seils durch ein Grundmodul und zum Sichern des Seils gegen Durchrutschen entlang einer Sperrrichtung mit den Merkmalen des Anspruchs 1.

Die Seildurchführung umfasst einen Seilkanal zum Hindurchstecken des Seils und ein Schlittenmodul mit einem Schlitten, welcher durch das Grundmodul schräg zu dem Seilkanal verschiebbar geführt ist, wobei das Schlittenmodul ferner (zumindest) ein rollbares Klemmelement zum Einklemmen des Seils zwischen dem rollbaren Klemmelement und einer Gegenwand des Seilkanals umfasst, wobei der Schlitten das (zumindest eine) Klemmelement entlang seines Verschiebewegs mitführt,
wobei eine Umfangsfläche des rollbaren Klemmelement, die eine Rotationsachse des rollbaren Klemmelements umgibt, entlang der Rotationsachse zur Mitte des rollbaren Klemmelements hin konvex nach außen gewölbt ist.

Aufgrund der derart zur Mitte hin nach außen gewölbten Umfangsfläche liegt das (zumindest eine) rollbare Klemmelement beim Festklemmen des Seils nur mit einer kleinen Kontaktfläche an dem Seil (und gegebenenfalls an dem Grundmodul) an. Deshalb kann der Schlitten mit dem rollbaren Klemmelement leicht entlang des Verschiebewegs zurückgezogen werden, um eine Sperrung des Seils gegen Durchrutschen entlang der Sperrrichtung freizugeben. Da das rollbare Klemmelement rollbar ist, ist außerdem ein Risiko reduziert, dass das Seil durch das Einklemmen beschädigt wird. Da die das rollbare Klemmelement an dem Seil und/oder an dem Grundkörper abrollen kann, ist die Seilaufnahme weniger anfällig dafür, dass ihre Bedienung durch Schmutz und/oder beschädigte Seile erheblich beeinträchtigt wird. Zudem ist die Sperrwirkung weniger abhängig von der genauen Lage und dem genauen Verlauf des Seils an und in der Seildurchführung. Zusammengefasst ermöglicht die Seildurchführung eine einfachere Bedienung des Schlaufenbildners bzw. des Drahtseilhalters und bietet gleichzeitig eine hohe Sicherheit.

Die Seildurchführung ist bezüglich des Durchrutschens des Seils entlang der Sperrrichtung selbstklemmend bzw. selbstsperrend. Dass kommt daher, dass der Schlitten durch das Grundmodul schräg zu dem Seilkanal verschiebbar geführt wird und das (zumindest eine) rollbare Klemmelement entlang seines Verschiebewegs mitführt.

Die Seildurchführung ist dazu eingerichtet, das Seil zwischen dem rollbaren Klemmelement und der Gegenwand einzuklemmen, wenn sich das Seil in dem Seilkanal entlang der Sperrrichtung zu bewegen beginnt. Somit wird das Durchrutschen entlang der Sperrrichtung verhindert.

Der Verschiebeweg kann gegenüber dem Seilkanal (bzw. gegenüber der Gegenwand des Seilkanals) schräg mit einem Neigungswinkel (oder mehreren Neigungswinkeln) in einem Bereich von 3° bis 30° verlaufen, insbesondere in einem Bereich von 5° bis 12°.

In einer Weiterbildung ist der Verschiebeweg linear. Zusätzlich und/oder alternativ kann der Seilkanal linear sein.

In einer Ausführungsform ist das rollbare Klemmelement schwimmend durch den Schlitten geführt. Das senkt ein Risiko, dass sich das rollbare Klemmelement, der Schlitten und/oder das Seil verkanten.

Gemäß einem anderen Aspekt ist das rollbare Klemmelement (zumindest im Wesentlichen) rotationssymmetrisch um die Rotationsachse ausgebildet. Das sorgt für ein gleichmäßiges Abrollen und eine einfache Herstellung.

In einer Ausführungsform ist das (zumindest eine) rollbare Klemmelement als Klemmkugel ausgebildet. Mit anderen Worten weist das rollbare Klemmelement eine kugelförmige Gestalt auf. Das erlaubt ein besonders gutes und zuverlässiges Abrollen. Abgesehen davon kann die Klemmkugel auch mit hoher Fertigungspräzision und niedrigen Toleranzen vergleichsweise einfach und günstig hergestellt werden.

Mit anderen Worten wird die obige Aufgabe insbesondere gelöst durch eine Seildurchführung, insbesondere für einen Schlaufenbildner bzw. einen Drahtseilhalter, zum Durchführen eines Seils durch ein Grundmodul und zum Sichern des Seils gegen Durchrutschen entlang einer Sperrrichtung umfassend einen Seilkanal zum Hindurchstecken des Seils und einem Schlittenmodul mit einem Schlitten, welcher durch das Grundmodul schräg zu dem Seilkanal verschiebbar geführt ist, wobei das Schlittenmodul ferner (zumindest) eine Klemmkugel zum Einklemmen des Seils zwischen der Klemmkugel und einer Gegenwand des Seilkanals umfasst, wobei der Schlitten die Klemmkugel entlang seines Verschiebewegs mitführt.

Gemäß einem weiteren Aspekt ist die Klemmkugel relativ zu dem Schlitten um ihren Mittelpunkt beliebig rotierbar. Die Klemmkugel kann relativ zu dem Schlitten um jede Achse durch ihren Mittelpunkt rotieren. Auch dies senkt das Risiko, dass sich die Klemmkugel, der Schlitten und/oder das Seil verkanten.

Diese mehrachsige Rotationsmöglichkeit begünstigt den Vorgang des Lösens der Klemmverbindung, insbesondere nach dem Aufbringen einer (Arbeits-)Last. Durch die aufgebrachte Last erfolgt ein Einklemmen der Klemmkugel zwischen dem Seil und einer Lauffläche, beispielsweise einer weiter unten erläuterten Keilwand. Durch die gedrehte Struktur des Seils entsteht ein mehrachsiger Spannungszustand. Beim Lösen dieser Verklemmung erleichtert die frei rotierbare Kugel durch seitliche Ausgleichsbewegungen den Vorgang. Das Seil hat dabei die Möglichkeit eine leichte Torsionsbewegung durchzuführen.

Außerdem kann es sein, dass das Seil keine glatte Oberfläche hat, sondern eine strukturierte Oberfläche. Das Seil kann beispielsweise aus miteinander verdrillten Litzen hergestellt sein. An einer Umfangsfläche des Seils können sich benachbarten äußeren Litzen leichte Vertiefungen ausgebildet sein, die entlang einer Erstreckungsrichtungs des Seils helixförmig in der Umfangsfläche des Seils erstrecken. Die beliebige Rotierbarkeit der Klemmkugel reduziert das Risiko, dass die strukturierte Oberfläche das gewollte Lösen der Klemmverbindung durch einen Benutzer erschwert.

Gemäß einem anderen Aspekt hat die Klemmkugel einen Durchmesser im Bereich von 5 mm bis 30 mm. In einer Ausführungsform hat die Klemmkugel einen Durchmesser im Bereich von 5 mm bis 10 mm. Das ermöglicht einen guten Kompromiss zwischen ausreichender Anlage und geringen Maßen. Diese Ausführungsform eignet sich beispielsweise besonders gut für handliche Schlaufenbildner. In einer anderen Ausführungsform hat die Klemmkugel einen Durchmesser im Bereich von 11 mm bis 30 mm. Dies Ausführungsform eignet sich beispielsweise besonders gut für Drahtseilhalter für hohe Lasten.

In einer Ausführungsform beträgt der Durchmesser der Klemmkugel mindestens das doppelte des größten zugelassen Seildurchmessers.

In einer Ausführungsform weist das rollbare Klemmelement eine Grundform wie ein (bauchiges) Fass, ein Ellipsoid, ein Football, oder eine Spindel auf.

Eine mechanische Führung des Schlittens für das rollbare Klemmelement kann dazu eingerichtet sein, eine begrenzte Bewegung des rollbaren Klemmelements relativ zu dem Schlitten in eine Richtung senkrecht zu dem Verschiebeweg zuzulassen. Auch dies trägt zur Reduzierung der Gefahr des Verkantens bei.

Die Umfangsfläche des rollbaren Klemmelements kann glatt ausgeführt sein. Dadurch kann das rollbare Klemmelement besonders leicht abrollen und/oder gleiten, insbesondere an dem Seil und/oder dem Grundmodul. Das verringert die erforderlichen Bedienkräfte. Außerdem schont dies das Seil und mindert das Risiko eines Verkantens. Insbesondere kann eine Oberfläche der Klemmkugel glatt ausgeführt sein.

Gemäß einem anderen Aspekt ist die Seilaufnahme insbesondere für Drahtseile geeignet. Mit Drahtseilen lassen sich hohe Zuglasten übertragen.

In einer Ausführungsform ist das rollbare Klemmelement, entlang des Verschiebewegs gesehen, an einem dem Seilkanal zugewandten Ende des Schlittens angeordnet. Die Klemmkraft wird an der Seite des Schlittens (zumindest im Wesentlichen) nur von dem rollbaren Klemmelement aufgenommen. Der Schlitten selbst wird durch das Seil nicht direkt belastet, zumindest nicht nennenswert. Es besteht zudem weniger Gefahr, dass der Schlitten durch das Seil blockiert wird, beispielsweise, wenn einzelne Drähte des (Draht-)Seils von dem Seil abstehen.

Gemäß einem weiteren Aspekt kann das Grundmodul ein Gehäuse sein. Es kann sich beispielsweise um ein Gehäuse des Schlaufenbildners bzw. des Drahtseilhalters handeln. Das Gehäuse kann einteilig sein oder aus mehreren Elementen zusammengesetzt sein.

Der Seilkanal kann sich von einer Einführöffnung für das Seil durch das Grundmodul (bspw. das Gehäuse) hindurch zu einer Ausführöffnung für das Seil erstrecken. Um das Seil durch die Seildurchführung zu führen, kann ein Ende des Seils in die Einführöffnung gesteckt und entlang einer Einführrichtung (entgegen der Sperrrichtung) durch den Seilkanal geschoben. Es kann auch möglich sein, das Seil durch die Ausführöffnung einzuführen (also entlang der Sperrrichtung), wenn ein Benutzer gleichzeitig die Klemmfunktion gelöst hält.

In einer Ausführungsform weist die Gegenwand des Seilkanals zumindest in einem Klemmbereich, welcher zum Klemmen des Seils zwischen dem rollbaren Klemmelement und der Gegenwand eingerichtet ist, eine gerundete Anlagefläche auf. Die gerundete Anlagefläche kann beispielsweise die Form einer länglichen Einbuchtung haben.

Gemäß einem weiteren Aspekt kann ein Profil der gerundeten Anlagefläche entlang einer Längsachse des Seilkanals (entlang welcher das Seil durch das Grundmodul durchsteckbar ist) variieren, insbesondere in dem Klemmbereich. Der Klemmbereich kann entlang der Längsachse räumlich ausgedehnt sein. Da der Schlitten bzw. das rollbare Klemmelement schräg zu dem Seilkanal geführt sind, tritt das rollbare Kontaktelement für Seile mit verschiedenen Seildurchmessern an unterschiedlichen Positionen entlang (der Längsachse) des Seilkanals in Kontakt mit dem Seil. Mit anderen Worten gibt es für verschiedene Seildurchmesser unterschiedliche Klemmpositionen (des Schlittens bzw. des rollbaren Klemmelements). Die Variation des Profils der gerundeten Anlagefläche erlaubt es, die Anlage für Seile mit verschiedenen Seildurchmessern individuell zu optimieren.

Dadurch können (in der Anlagefläche) entlang der Längsachse mehrere unterschiedlich geformte "Klemmzonen" für verschiedene Seildurchmesser ausgebildet sein. Die unterschiedlich geformten Klemmzonen erlauben es, für die verschiedenen Seildurchmesser jeweils eine besonders gut angepasste Klemmzone zu schaffen. So werden dünnere Seile entlang der Längsachse gesehen am nächsten zu der Einführöffnung für das Seil festgeklemmt bzw. gesichert. Entsprechend befindet sich eine Klemmzone für den kleinsten (vorgesehenen) Seildurchmesser entlang der Einführrichtung am nächsten zu der Einführöffnung. Mit steigenden Seildurchmesser wandern die korrespondierenden Klemmzonen der Längsachse entlang in der Anlagefläche immer weiter weg von der Einführöffnung entlang, bis zu einem Ende einer "Klemmstrecke". Die jeweilige Klemmposition des Schlittens ist mit steigendem Seildurchmesser immer weiter entfernt von der Einführöffnung (bzw. immer näher am Ende der Klemmstrecke).

Insbesondere kann sich die gerundete Anlagefläche in dem Klemmbereich entlang der Sperrrichtung verjüngen. Die gerundete Anlagefläche kann sich zumindest in einem Teilbereich des Klemmbereichs entlang der Sperrrichtung kontinuierlich verjüngen, beispielsweise konisch. Gemäß einem Aspekt kann sich in dem Klemmbereich eine Tiefe der gerundeten Anlagefläche entlang der Sperrrichtung verringern.

Entsprechend können benachbarte der unterschiedlich geformten Klemmzonen kontinuierlich ineinander übergehen.

In einer Weiterbildung ist in der gerundeten Anlagefläche zusätzlich eine kleinere, gerundete Nut ausgebildet, die stärker gekrümmt ist als die gerundete Anlagefläche. Die zusätzliche kleinere, gerundete Nut hilft bei der optimalen Positionierung des Seils in dem Klemmbereich. Ferner können durch die Kombination der gerundeten Anlagefläche mit der kleineren, gerundeten Nut Seile mit unterschiedlichen Seildurchmessern besser gegen Durchrutschen entlang der Sperrrichtung gesichert werden.

Übergangsbereiche zwischen der kleineren, gerundeten Nut und der gerundeten Anlagefläche können abgerundet sein. Dadurch werden Beschädigungen des Seils vermieden.

Gemäß einem weiteren Aspekt kann ein Profil der kleineren, gerundeten Nut entlang der Längsachse des Seilkanals variieren, insbesondere in dem Klemmbereich. Die Variation des Profils der kleineren, runden Nut erlaubt es, die Anlage für Seile mit verschiedenen Seildurchmessern individuell zu optimieren. Die bezüglich der unterschiedlichen Klemmpositionen und Klemmzonen erläuterten Vorteile gelten entsprechend.

Insbesondere kann sich die kleinere, gerundete in dem Klemmbereich entlang der Sperrrichtung verjüngen. Die kleinere, gerundete Nut kann sich zumindest in einem Teilbereich des Klemmbereichs entlang der Sperrrichtung kontinuierlich verjüngen, beispielsweise konisch.

Alternativ oder zusätzlich erstreckt sich die gerundete Nut nur entlang eines Teilbereichs des Klemmbereichs, beispielsweise in einem entlang der Sperrrichtung gesehenen hinterem Teilbereich.

In einer Weiterbildung variieren die Profile der kleineren, gerundeten Nut und der gerundeten Anlagefläche in dem Klemmbereich entlang der Längsachse. Es kann vorgesehen sein, dass die Profile in dem Klemmbereich entlang der Längsachse gemeinsam skalieren.

Gemäß einem Aspekt ist die Einführöffnung abgerundet und/oder verbreitert sich nach außen hin. Typischerweise bringt das geklemmte Seil im Einsatz von dem Ende des Seilkanals mit der Einführöffnung her eine Zuglast ein. Wenn das Seil an der Einführöffnung schräg zu einer Mittelachse der Einführöffnung verläuft, dann werden an der Einführöffnung von dem Seil seitliche Kraftkomponenten ("Querkräfte") auf eine Umrandung der Einführöffnung aufgebracht. Die Abrundung Einführöffnung und/oder die Verbreiterung der Trichterform der Einführöffnung nach außen hin sorgen für eine gleichmäßigere Übertragung der Querkräfte von dem Seil auf die Einführöffnung (genauer auf deren Umrandung und schließlich auf das Grundmodul). Das Seil wird nicht an einer scharfen Kante der Einführöffnung beschädigt. Es kann sich auch nicht an einer derartigen Kante unerwünscht festklemmen. Die Einführöffnung kann beispielsweise mit einem festen oder variierenden Biegeradius abgerundet sein.

Gemäß einem Aspekt kann die Mittelachse der Einführöffnung parallel zu der Längsachse des Seilkanals und/oder der Sperrrichtung in dem Seilkanal sein. Das verringert das Risiko, dass das Seil an der Umrandung der Einführöffnung hohe Querkräfte aufbringt.

Alternativ oder zusätzlich ist die Ausführöffnung abgerundet und/oder verbreitert sich nach außen hin. Das Seil wird nicht an Kanten der Ausführöffnung beschädigt. Es kann sich auch nicht an derartigen Kanten unerwünscht festklemmen. Die Ausführöffnung kann beispielsweise mit einem festen oder variierenden Biegeradius abgerundet sein.

Die Ausführöffnung kann dazu eingerichtet sein, seitliche Kraftkomponenten aufzunehmen und ins das Grundmodul (bspw. das Gehäuse) zu leiten. An der Ausführöffnung ist diese Eigenschaft speziell für einen Schlaufenbildner mit zwei Seildurchführungen von Vorteil. Hier öffnet sich eine Seil-Schlaufe an der Ausführöffnung einer der Seildurchführungen und lässt so das Seil dort unter einem Winkel austreten. Daraus resultieren seitliche Kraftkomponenten ("Querkräfte") an besagter Ausgangsöffnung. Das Deckelelement an dieser Ausführöffnung (und/oder das zusätzliche Bauteil der Fixierung dieses Deckelelements, siehe unten) lenkt das Seil dort um. Das Seil verläuft dann beispielsweise gerade entlang der Längsachse des zugehörigen Seilkanals. Dabei nimmt dieses Deckelelement (bzw. das zugehörige zusätzliche Bauteil) zumindest einen Teil der seitlichen Kraftkomponenten von dem Seil auf und leitet sie an den Grundkörper weiter. An der anderen Seildurchführung des Schlaufenbildners tritt das Seil auf der Seite der Seil-Schlaufe durch die zugehörige Einführöffnung in den anderen Seilkanal. Hier kann das Seil entweder gerade verlaufen oder einen Winkel zur Längsachse des anderen Seilkanals ausbilden. Die Querkräfte können an dieser Einführöffnung über das Gehäuse aufgenommen werden.

In dem Seilkanal treten an in dem Seil zwischen der Einführöffnung und der Ausführöffnung - abgesehen von der Klemmverbindung selbst - nur Zugkräfte auf. Etwaige externe Querkräfte werden direkt an der Einführöffnung bzw. der Ausführöffnung und letztlich von dem Grundkörper (dem Gehäuse) absorbiert. Zwischen der Einführöffnung und der Ausführöffnung verläuft das Seil immer parallel zu dem Seilkanal, beispielsweise parallel zu dessen Längsachse. Deshalb werden weder die Klemmverbindung noch das Lösen der Klemmverbindung durch Querkräfte beeinträchtigt.

Eine Mittelachse der Ausführöffnung kann parallel zu der Längsachse des Seilkanals und/oder der Sperrrichtung in dem Seilkanal sein. Das ist beispielsweise vorteilhaft, wenn die Seildurchführung in dem Schlaufenbildner verwendet wird. Es verhindert eine Biegung des Seils innerhalb der Seildurchführung und schont das Seil. Zudem ist es sehr intuitiv für den Benutzer.

In einer anderen Ausführungsform ist die Mittelachse der Ausführöffnung schräg zu der Längsachse des Seilkanals und/oder der Sperrrichtung in dem Seilkanal. Alternativ oder zusätzlich ist die Mittelachse der Ausführöffnung schräg zu der Mittelachse der Einführöffnung. Diese Modifikationen sind beispielsweise interessant für die Verwendung der Seildurchführung in dem Drahtseilhalter. Bei dem Drahtseilhalter kann eine Last bzw. ein Befestigungselement für die Last (bspw. ein Haken) an einem "unteren" Endbereich des Grundmoduls (bspw. des Gehäuses) des Drahtseilhalters angebracht sein. Der untere Endbereich liegt entlang der Längsachse und/oder der Sperrrichtung gesehen gegenüber einem oberen Endbereich mit der Einführöffnung. Da die Mittelachse der Ausführöffnung schräg verläuft, kann das (typischerweise lastfreie) Ende des Seils problemlos z.B. seitlich aus dem Drahtseilhalter herausgeführt werden.

Gemäß einem anderen Aspekt ist die Seilaufnahme dazu eingerichtet, dass das rollbare Klemmelement in einer vorderen Position des Schlittens entlang des Verschiebewegs in den Seilkanal eingetaucht ist und in einer zurückgezogenen Position des Schlittens entlang des Verschiebewegs aus dem Seilkanal herausgezogen ist.

Die Seilaufnahme kann ein elastisches Rückstellelement aufweisen, die den Schlitten zu der vorderen Position hin drückt. Das elastische Rückstellelement kann beispielsweise eine Feder umfassen, insbesondere eine Spiralfeder.

Der Seilkanal kann sich durch einen Innenraum (für die jeweilige Seildurchführung) des Grundmoduls erstrecken, in welchen der Schlitten sowie das rollbare Klemmelement aufgenommen sind. Das ermöglicht ein besonders kompaktes und kostengünstiges Design. Der Seilkanal kann sich insbesondere teilweise durch den Innenraum der zugehörigen Seildurchführung erstrecken. Anders ausgedrückt kann ein Teil des Innenraums gleichzeitig einen Teil des Seilkanals ausbilden.

Der Seilkanal kann sich linear entlang der Längsachse durch das Gehäuse hindurch erstrecken.

Die Seilaufnahme kann dazu eingerichtet sein, dass sich das rollbare Klemmelement beim Klemmen des Seils unmittelbar an dem Grundmodul abstützt. Folglich kann die Klemmkraft des rollbaren Klemmelements direkt in das Grundmodul eingeleitet werden. Insbesondere muss (zumindest kein wesentlicher) Teil der Klemmkraft mittels des Schlittens übertragen werden.

Beispielsweise kann vorgesehen sein, dass das rollbare Klemmelement beim Klemmen des Seils unmittelbar an einer Keilwand des Innenraums anliegt, die der Gegenwand des Seilkanals gegenüber liegt. Die Keilwand kann gegenüber der Gegenwand des Seilkanals geneigt sein, beispielsweise mit einem Neigungswinkel (oder mehreren Neigungswinkeln) in einem Bereich von 3° bis 30°, insbesondere in einem Bereich von 5° bis 12°. In einer Weiterbildung ist die Keilwand gerade (nicht gekrümmt).

Das rollbare Klemmelement kann gefertigt sein
- aus (zumindest) einem metallischen Material, beispielsweise aus einer Aluminium-, Messing-, Kupfer-, und/oder Edelstahllegierungen,
- aus (zumindest) einem nicht-metallischen Material, beispielsweise Kunststoff oder Keramik und/oder
- aus (zumindest) einem Verbundwerkstoff, beispielsweise einem faserverstärkten Kunststoff.

Bei dem (zumindest) einem faserverstärkten Kunststoff kann es sich beispielsweise um kohlenstofffaserverstärken Kunststoff handeln.

In einer Ausführungsform ist die Klemmkugel aus Metall gefertigt, beispielsweise aus einer Messinglegierung. Messinglegierungen sind ausreichend nachgiebig, um das Risiko einer Beschädigung des Seils zu verringern, aber robust genug, um hohe Lasten und eine lange Lebensdauer sicherzustellen.

Alternativ oder zusätzlich kann das rollbare Klemmelement aus Vollmaterial gefertigt sein. Dadurch kann das rollbare Klemmelement besonders hohe Kräfte übertragen und ist besonders maßhaltig. So kann die Klemmkugel als Vollkugel ausgebildet sein.

In einer Weiterbildung ist in der Keilwand mindestens eine Rastausnehmung zur Stabilisierung des rollbaren Klemmelements in einer vorbestimmten Klemmposition ausgebildet.

Gemäß einem anderen Aspekt liegen die Längsachse des Seilkanals (entlang welcher das Seil durch das Grundmodul durchsteckbar ist) und der Verschiebeweg in einer (Haupt-)Ebene. Dadurch können der Schlitten und das rollbare Klemmelement sehr kontrolliert und gleichmäßig an das Seil heran und von dem Seil wegbewegt werden. Zudem ist dadurch sichergestellt, dass die Klemmkraft zumindest im Wesentlichen in der Hauptebene wirkt, und zwar unabhängig von dem genauen Seildurchmesser.

In einer Weiterbildung liegt ein Zentrum des rollbaren Klemmelements, beispielsweise der Mittelpunkt der Klemmkugel, unabhängig von der Position des Schlittens und des rollbaren Klemmelements (entlang des Verschiebewegs) stets in der Hauptebene.

In einer Ausführungsform ist der Innenraum entlang einer Normalenrichtung, die senkrecht zu der Hauptebene steht, durch eine Vorderwand begrenzt.

Gemäß einem Aspekt kann die Rotationsachse des rollbaren Klemmelements stets (zumindest im Wesentlichen) senkrecht zu der Hauptebene liegen.

Gemäß einem anderen Aspekt weist die Seildurchführung ein Betätigungselement zur Bedienung des Schlittens auf. Mittels des Betätigungselements kann der Benutzer die Sicherung des Seils gegen Durchrutschen entlang der Sperrrichtung aufheben. Beispielsweise kann der Benutzer den Schlitten (und damit das rollbare Klemmelement) mittels des Betätigungselements entlang des Verschiebewegs aus der vorderen Position herausbewegen. Dadurch wird das Durchrutschen des Seils entlang der Sperrrichtung freigegeben.

Das Betätigungselement kann außen an dem Grundmodul angeordnet sein, beispielsweise an der Vorderseite des Grundmoduls (an einer vorderen Außenseite des Grundmoduls).

Das Betätigungselement kann funktional mit dem Schlitten gekoppelt sein, zum Beispiel mechanisch.

Insbesondere kann das Betätigungselement für den Schlitten über eine Verbindung, die sich durch einen Schlitz in der Vorderwand erstreckt, mit dem Schlitten verbunden sein. Das ermöglicht die einfache Betätigung des Schlittenmoduls von der Vorderseite her. Eine mechanische Führung der Verbindung kann zusätzlich zur Führung des Schlittens entlang des Verschiebewegs beitragen.

Das Betätigungselement kann einstückig mit dem Schlitten ausgebildet sein. Das verringert die Anzahl der Produktionsschritte.

Alternativ oder zusätzlich kann eine Rückwand des Innenraums, welche den Innenraum entlang der Normalenrichtung an einer Rückseite begrenzt (welche der Vorderwand mit dem Schlitz gegenüber liegt), eine Führungsnut zur Führung des Schlittens entlang des Verschiebewegs aufweisen. Dieses Merkmal trägt zur zuverlässigen Führung des Schlittens entlang des Verschiebewegs bei.

In einer Ausführungsform weist das Schlittenmodul genau ein rollbares Klemmelement auf, beispielsweise genau eine Klemmkugel. Das ermöglicht eine günstige Produktion und besonders kompakte Abmessungen.

Gemäß einem anderen Aspekt weist das Schlittenmodule zumindest ein weiteres Klemmelement zum Einklemmen des Seils auf. Das weitere Klemmelement kann zur Erhöhung der Klemmkraft und/oder als Notsicherung dienen.

In einer Weiterbildung umfasst das Schlittenmodul ferner (zumindest) ein weiteres rollbares Klemmelement zum Einklemmen des Seils zwischen dem (zumindest einen) weiteren rollbaren Klemmelement und der Gegenwand des Seilkanals, wobei der Schlitten das (zumindest eine) weitere rollbare Klemmelement entlang seines Verschiebewegs mitführt.

Mit anderen Worten kann das Schlittenmodul (zumindest) ein erstes rollbares Klemmelement und ein zweites rollbares Klemmelement aufweisen.

Das erste rollbare Klemmelement kann beliebig nach einer der obigen Ausführungsformen ausgeführt sein.

Das zweite rollbare Klemmelement kann beliebig nach einer der obigen Ausführungsformen ausgeführt sein.

Das erste rollbare Klemmelement können und das zweite rollbare Klemmelement können unterschiedlich oder identisch ausgebildet sein.

Beispielsweise kann zweite Klemmelement eine größere Abrolllänge (entlang des Verschiebewegs) aufweisen als das erste Klemmelement.

In einer Ausführungsform ist das erste rollbare Klemmelement als eine erste Klemmkugel ausgebildet und das zweite rollbare Klemmelement als eine zweite Klemmkugel. Dabei kann ein Durchmesser der zweiten Klemmkugel größer sein als ein Durchmesser der ersten Klemmkugel.
Gemäß einem weiteren Aspekt sind das erste rollbare Klemmelement und zweite rollbare Klemmelement entlang des Verschiebewegs hintereinander angeordnet.

Gemäß einem anderen Aspekt sind das erste rollbare Klemmelement und das zweite rollbare Klemmelement entlang des Verschiebewegs nebeneinander angeordnet.

In einer Weiterbildung umfasst das Schlittenmodul zumindest zwei weitere rollbare Klemmelemente. Mit anderen Worten weist das Schlittenmodul insgesamt mindestens drei rollbare Klemmelemente auf.

Neben einem Grundkörper weist das Gehäuse für die Seildurchführung ein Deckelelement (ein "Verschlusselement") auf.

Das Deckelelement kann den Innenraum an einer Seite der Ausführöffnung für das Seil begrenzen.

Die Ausführöffnung kann durch den Grundkörper und/oder das Deckelelement gebildet sein. Insbesondere kann das Deckelelement zumindest einen Teil der Ausführöffnung bilden.

Das Deckelelement kann zur Aufnahme von schrägen Kraftkomponenten von dem Seil ausgebildet sein (speziell in dem Teil der Ausführöffnung, die durch das Deckelelement gebildet wird).

Hier öffnet sich die Schlaufe nach dem Verlassen des Gehäuses und lässt so das Seil unter einem Winkel austreten. Daraus resultieren Querkräfte, die berücksichtigt werden müssen.

Das Deckelelement kann an dem Grundkörper des Gehäuses fixiert sein. Es kann abnehmbar oder nicht abnehmbar an dem Grundkörper des Gehäuses fixiert sein.

Das Deckelelement kann formschlüssig an dem Grundkörper fixiert sein. Insbesondere kann ein zusätzliches Bauteil existieren, welches das Deckelelement in seiner Position stabilisiert (formschlüssig). Beispielsweise kann das Deckelementen durch einen Sicherungsstift an dem Grundkörper fixiert sein. Das zusätzliche Bauteil, beispielsweise der optionale Sicherungsstift, kann zur zusätzlichen Übertragung von seitlichen Kraftkomponenten auf den Grundkörper dienen.

Alternativ oder zusätzlich kann das Deckelelement an dem Grundkörper über Reibkräfte fixiert sein (kraftschlüssig). Dadurch können gegebenenfalls zusätzliche Bauteile eingespart werden.

Alternativ oder zusätzlich kann das Deckelelement stoffschlüssig an dem Gehäuse fixiert sein, beispielsweise durch Verkleben, Verschweißen, Verlöten und/oder Fixieren mittels Metalldruckguss (bspw. Zink-Druckguss), etc. Dadurch können gegebenenfalls zusätzliche Bauteile eingespart werden.

Vor dem Fixieren des Deckelelements kann das Schlittenmodul einfach in das Gehäuse, genauer in dessen Grundkörper, eingesetzt werden. Nach dem Einsetzen des Schlittenmoduls und dem Fixieren des Deckelelements ist das Schlittenmodul gegen Herausrutschen aus dem Gehäuse gesichert. Das Deckelelement verhindert also das Herausrutschen des Schlittenmoduls aus dem Gehäuse. Zudem kann es als Anlage für das elastische Rückstellelement dienen.

Die obige Aufgabe wird ferner gelöst durch einen Schlaufenbildner zur Bildung einer Schlaufe aus einem Seil, wobei der Schlaufenbildner ein Grundmodul mit einer ersten Seildurchführung und einer zweiten Seildurchführung umfasst, wobei die erste Seildurchführung nach einer der beschriebenen Ausführungsformen ausgebildet ist und die zweite Seildurchführung nach einer der beschriebenen Ausführungsformen ausgebildet ist.

Die zuvor beschriebenen Ausführungsformen, Modifikationen und Vorteile gelten entsprechend.

Die erste Seildurchführung und die zweite Seildurchführung können unterschiedlich ausgebildet sein. In einer Ausführungsform sind zwei Seildurchführungen (die erste Seildurchführung und die zweite Seildurchführung) identisch ausgebildet.

Die zwei Seildurchführungen sind also in einem gemeinsamen Grundmodul ausgebildet.

Wie zuvor beschrieben ist, kann das Grundmodul ein Gehäuse des Schlaufenbildners sein. Das Gehäuse kann einteilig sein oder aus mehreren Elementen zusammengesetzt sein.

In einer Ausführungsform sind eine Hauptebene der ersten Seildurchführung und eine Hauptebene der zweiten Seildurchführung parallel zueinander. Mit anderen Worten teilen die erste Seildurchführung und die zweite Seildurchführung eine gemeinsame Normalenrichtung.

Insbesondere können die erste Seildurchführung und die zweite Seildurchführung eine gemeinsame Hauptebene aufweisen. Das erleichtert die symmetrische Kraftverteilung und eine besonders einfache Bedienung.

In einer Ausführungsform sind Betätigungselemente der Schlittenmodule der ersten Seildurchführung und der zweiten Seildurchführung jeweils an einer Vorderseite des Grundmoduls angeordnet. Die Betätigungselemente beider Seildurchführungen sind also an derselben Vorderseite durch einen Benutzer bedienbar. Das erleichtert die Bedienung und erhöht die Sicherheit.

Gemäß einem anderen Aspekt können ein Seilkanal der ersten Seildurchführung und ein Seilkanal der zweiten Seildurchführung parallel verlaufen. Insbesondere können eine Längsachse des Seilkanals der ersten Seildurchführung und eine Längsachse des Seilkanals der zweiten Seildurchführung parallel verlaufen.

In einer Weiterbildung sind die Sperrrichtungen der zwei Seildurchführungen antiparallel orientiert.

In einer Ausführungsform sind die zwei Seildurchführungen (die erste Seildurchführung und die zweite Seildurchführung) gegenläufig symmetrisch in dem Grundmodul angeordnet. Das ermöglicht eine besonders einfache und sichere Schlaufenbildung.

Gemäß einem anderen Aspekt umschließt das Grundmodul ein Durchgangsloch, wobei das Durchgangsloch zusätzlich zu den Seildurchführungen ausgebildet ist. Das Durchgangsloch kann zur Fixierung oder zum Transport des Schlaufenbildners genutzt werden.

Das Durchgangsloch kann sich entlang der Normalenrichtung erstrecken. Damit ist das Durchgangsloch gut von der Vorderseite und der Rückseite des Grundmoduls (des Gehäuses) zugänglich.

Alternativ oder zusätzlich kann das Durchgangsloch zwischen den Seilkanälen der zwei Seildurchführungen angeordnet sein, insbesondere mittig zwischen den Seilkanälen. Das ermöglicht einen symmetrischen Krafttransfer zwischen dem Durchgangsloch und den zwei Seildurchführungen.

Die obige Aufgabe wird ferner gelöst durch einen Drahtseilhalter mit einer Seildurchführung nach einer der beschriebenen Ausführungsformen.

Die zuvor beschriebenen Ausführungsformen, Modifikationen und Vorteile gelten entsprechend.

Gemäß einem Aspekt ist der Drahtseilhalter verstellbar. Die Seildurchführung ermöglicht ein leichtes Öffnen der Klemmverbindung durch den Benutzer. Dadurch kann die relative Position zwischen Drahtseilhalter und Seil leicht verändert werden.

Die Verwendung der beschriebenen Seildurchführung erlaubt - verglichen zu Drahtseilhaltern mit einer konventionellen Klemmmechanik - eine kostengünstigere Montage. Insbesondere kann der Zusammenbau zumindest teilweise leichter automatisiert werden. Zudem muss der vorgeschlagene Drahtseilhalter nicht im Wesentlichen rotationssymmetrisch sein. Bei konventionellen Drahtseilhaltern muss zum gezielten Lösen der Klemmverbindung eine Bedienhülse an einer oberen Einführöffnung nach unten gedrückt werden. Aufgrund dieser Position ist die Bedienhülse von unten schlecht sichtbar und erreichbar. Sofern keine gesonderte Sicherung vorgesehen wird, besteht zudem besteht die Gefahr, dass bei schräger Einführung des Seils in die Einführöffnung unter Last unbeabsichtigt die Bedienhülse durch das Seil betätigt wird. Die beschriebene Seildurchführung erlaubt eine seitliche Anordnung des Betätigungselements. Das erleichtert die Bedienung und erhöht die Sicherheit. Während konventionelle Drahtseilhalter häufig nur für eine Verkippung der Zugrichtung gegenüber einer Längsachse (bzw. eine Mittelachse der Einführöffnung) um maximal 6° zugelassen sein, erlaubt der vorgeschlagene Drahtseilhalter größere Winkel.

Wie zuvor beschrieben ist, kann das Grundmodul ein Gehäuse des Drahtseilhalters sein. Das Gehäuse kann einteilig sein oder aus mehreren Elementen zusammengesetzt sein.

Gemäß einem anderen Aspekt kann ein Seilkanal der Seildurchführung entlang einer Längsachse des Grundmoduls verlaufen.

Mit der oben beschriebenen Ausbildung mehrerer unterschiedlich geformter Klemmzonen für verschiedene Seildurchmesser kann der Drahtseilhalter für die Verwendung von Seilen mit verschiedenen Seildurchmessern optimiert werden. Die Verwendung einer die Klemmkugel, die relativ zu dem Schlitten um ihren Mittelpunkt beliebig rotierbar ist, stellt sicher, dass der Benutzer die Klemmverbindung einfach lösen kann, insbesondere auch für verschiedene Seildurchmessern und verschieden strukturierte Oberflächen unterschiedlicher Seile.

Die Erfindung wird nachfolgend anhand von Ausführungsbeispielen und unter Bezugnahme auf die Figuren erläutert. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen schematisch:
- Fig. 1: eine Schnittansicht einer ersten erfindungsgemäßen Ausführungsform eines Schlaufenbildners, in welchem zwei Seildurchführungen gemäß Fig. 2 gegenläufig symmetrisch bzw. antiparallel in einem gemeinsamen Gehäuse (Grundmodul) ausgebildet sind;
- Fig. 2: einen vergrößerten und Ausschnitt von Fig. 1 mit einer der erfindungsgemäßen Seildurchführungen, wobei die Schnittebene einer Hauptebene entspricht, welche durch eine Längsachse eines Seilkanals und einen Verschiebeweg eines Schlittens der Seildurchführung aufgespannt wird;
- Fig. 3: die in Fig. 2 gezeigte Seildurchführung mit einem darin aufgenommenen Seil, wobei die Seildurchführung verhindert, dass das Seil unbeabsichtigt relativ zu dem Gehäuse entlang einer Sperrrichtung durchrutschen kann;
- Fig. 4: eine Aufsicht auf eine Vorderseite des in Fig. 1 gezeigten Schlaufenbildners;
- Fig. 5: eine Schnittansicht entlang der Schnittlinie B-B in Fig. 4, wobei die Schnittebene senkrecht zu den Längsachsen der Seildurchführungen und den zusammenfallenden Hauptebenen der zwei Seildurchführungen orientiert ist;
- Fig. 6: eine Schnittansicht entlang der Schnittlinie A-A in Fig. 4;
- Fig. 7: eine perspektivische Ansicht des in Fig. 1 gezeigten Schlaufenbildners;
- Fig. 8: eine vergrößerte Ansicht einer Einführöffnung für das Seil;
- Fig. 9: die in Fig. 2 gezeigte Seildurchführung mit einem darin aufgenommenen Seil, wobei ein Schlittenmodul zurückgezogen ist, sodass das Seil in dem Seilkanal hin- und her bewegt werden kann;
- Fig. 10: eine perspektivische Ansicht einer zweiten Ausführungsform eines erfindungsgemäßen Schlaufenbildners mit einem modifizierten Grundkörper mit einem zentralen Durchgangsloch;
- Fig. 11: ein als Klemmkugel ausgebildetes rollbares Klemmelement der Seildurchführungen der Schlaufenbildner gemäß Fig. 1 und 10;
- Fig. 12: eine modifizierte Ausführung des Klemmelements für die Seildurchführungen der Schlaufenbildner gemäß Fig. 1 und 10 mit einer fassförmigen Grundgestalt;
- Fig. 13: beispielhaft andere Rotationsachsen, um welche die Klemmkugel aus Fig. 11 rotieren kann; und
- Fig. 14: eine schematische Seitenansicht eines Drahtseilhalters mit einer Seildurchführung gemäß Fig. 2.

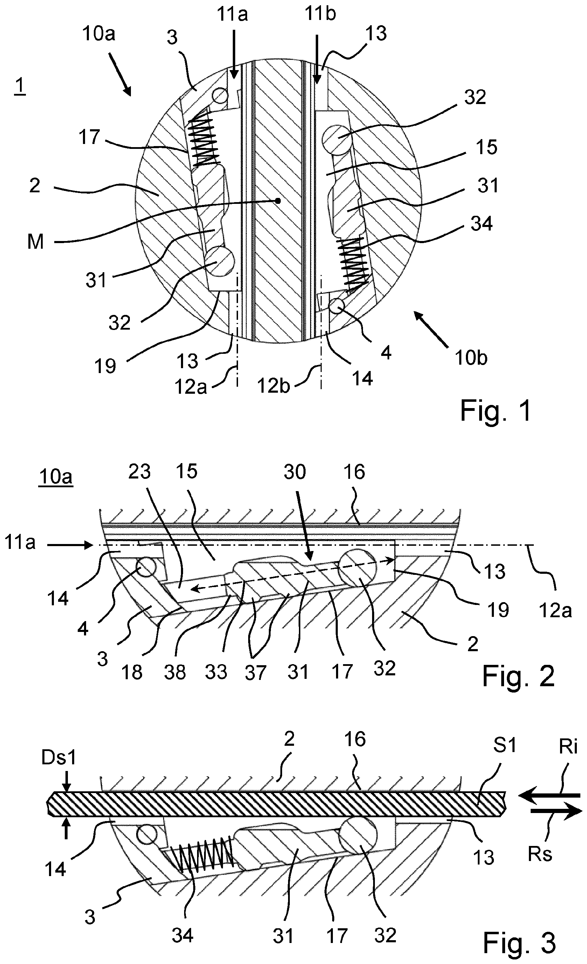

Fig. 1 zeigt eine Schnittansicht einer ersten Ausführungsform eines Schlaufenbildners 1. In einem Gehäuse 2 (einem Grundmodul 2) sind zwei Seildurchführungen 10a und 10b angeordnet.

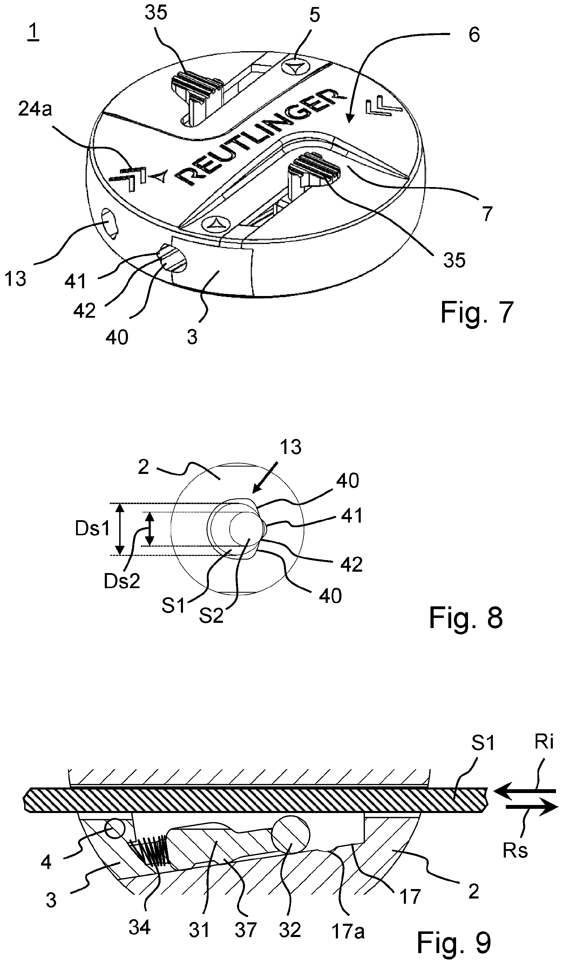

Fig. 2 zeigt einen vergrößerten und gedrehten Ausschnitt von Fig. 1 mit einer ersten Seildurchführung 10a. Fig. 3 zeigt die erste Seildurchführung 10a mit einem darin aufgenommenen Seil S1. Bei dem Seil S1 handelt es sich um ein Drahtseil, beispielsweise mit einem Seildurchmesser Ds1 von 3 mm. Insbesondere kann es sich um ein Stahl-Drahtseil handeln. In Fig. 8 ist außerdem ein Seil S2 mit einem kleineren Seildurchmesser Ds2 dargestellt.

Es wird zunächst die Seildurchführung 10a exemplarisch im Detail beschrieben. Sämtliche Merkmale, möglichen Modifikation und Vorteile sind analog für die zweite Seildurchführung 10b relevant. Die beiden Seildurchführungen 10a, 10b können - wie bei der hier beschriebenen Ausführungsform - identisch ausgebildet sein. Im Allgemeinen ist es möglich, dass die beiden Seildurchführungen 10a, 10b im Rahmen der beschriebenen Modifikationen unterschiedlich ausgestaltet sind.

Die Seildurchführung 10a umfasst einen Seilkanal 11a und ein Schlittenmodul 30. Das Schlittenmodul 30 weist einen Schlitten 31, genau ein rollbares Klemmelement und optional ein elastisches Rückstellelement 34 auf, die in einen Innenraum 15 des Gehäuses 2 für die (erste) Seildurchführung 10a aufgenommen sind. Der Schlitten 31 ist entlang eines Verschiebewegs 33 verschiebbar. Das rollbare Klemmelement ist hier eine Klemmkugel 32.

Der Seilkanal 11a und der Innenraum 15 sind in dem Gehäuse 2 ausgebildet. Der Seilkanal 11a erstreckt sich von einer Einführöffnung 13 (unten in Fig. 1, rechts in Fig. 2) für das Seil S1, S2 durch das Gehäuse 2 hindurch zu einer Ausführöffnung 14 für das Seil S1, S2. Der Seilkanal 11a erstreckt sich teilweise durch den Innenraum 15 der zugehörigen Seildurchführung 10a. Anders ausgedrückt bilden ein Teil des Innenraums 15 gleichzeitig einen Teil des Seilkanals 11a aus. In dieser Ausführungsform erstreckt sich der (erste) Seilkanal 11a linear entlang einer (ersten) Längsachse 12a durch das Gehäuse 2 hindurch.

Neben einem Grundkörper weist das Gehäuse 2 für jede Seildurchführung 10a, 10b ein Deckelelement 3 auf. Für die jeweilige Seildurchführung 10a, 10b begrenzt das zugehörige Deckelelement 3 den Innenraum 15 an einer Seite der Ausführöffnung 14. Die Ausführöffnung 14 ist durch den Grundkörper und das Deckelelement 3 gebildet.

Im Folgenden wird exemplarisch ein einzelnes Deckenelement 3 betrachtet. Sämtliche Merkmale, möglichen Modifikation und Vorteile können analog für das weitere Deckelelement 3 gelten. Das Deckelelement 3 ist an dem Grundkörper des Gehäuses 2 fixiert. Es kann abnehmbar oder nicht abnehmbar an dem Grundkörper des Gehäuses 2 fixiert sein. Beispielsweise kann das Deckelelement 3 dadurch fixiert sein, dass an dem Grundkörper ausgebildete Befestigungslaschen beim Einsetzen des Deckelelements 3 in den Grundkörper umgeknickt werden und in der umgeknickten Konfiguration das Deckelelement 3 an dem Grundkörper halten. Alternativ oder zusätzlich kann das jeweilige Deckelelement 3 durch einen Sicherungsstift 4 an dem Grundkörper fixiert sein, wie es bei den vorliegenden Ausführungsformen gezeigt ist. Vor dem Fixieren des Deckelelements 3 kann das Schlittenmodul 30 einfach in das Gehäuse 2, genauer in dessen Grundkörper, eingesetzt werden. Nach dem Einsetzen des Schlittenmoduls 30 und dem Fixieren des Deckelelements 3 ist das Schlittenmodul 30 gegen Herausrutschen aus dem Gehäuse 2 gesichert. Das Deckelelement 3 verhindert also das Herausrutschen des zugehörigen Schlittenmoduls 30 aus dem Gehäuse 2. Zudem dient es als Anlage für das elastische Rückstellelement 34.

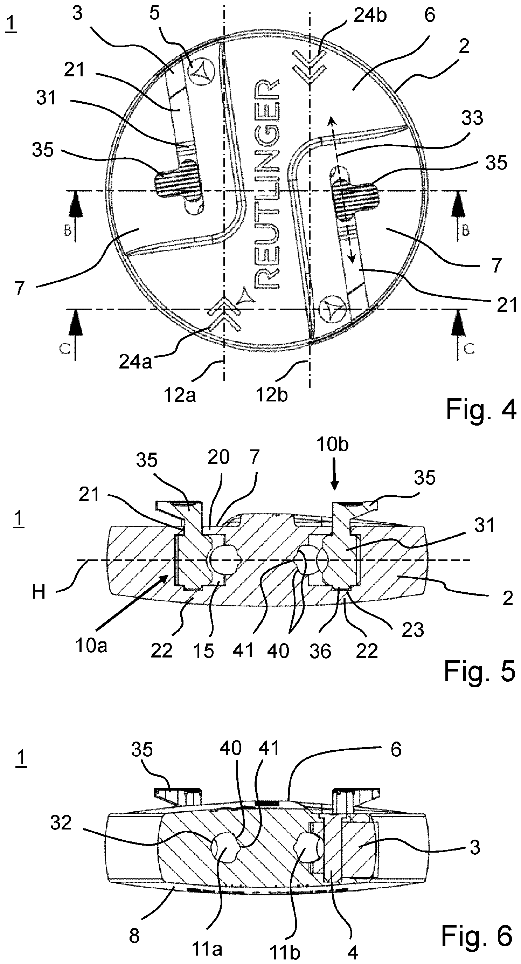

Bei der exemplarisch dargestellten Ausführungsform ist der Sicherungsstift 4 verpresst. In Figs. 4 und 7 ist ein Kopf 5 des Sicherungsstiftes 4 auf der Vorderseite 6 des Gehäuses 2 zu erkennen.

Der Schlitten 31 ist derart beweglich in dem Gehäuse 2 geführt, dass es entlang des begrenzten Verschiebewegs 33 hin und her bewegt werden kann. Dabei führt der Schlitten 31 die Klemmkugel 32 entlang des Verschiebewegs 33 mit.

Bei dieser Ausführungsform ist der Verschiebeweg 33 linear. Mit anderen Worten ist der Schlitten 31 in dieser Ausführungsform linear verschiebbar. Der Verschiebeweg 33 fällt mit einer Längsachse (nicht gezeigt) des Schlittens 31 zusammen. Hier führt der Schlitten 31 die Klemmkugel 32 bei Bewegungen entlang seiner Längsachse mit.

Der Schlitten 31 ist durch das Gehäuse 2 schräg zu dem Seilkanal 11a geführt. Im Detail ist der Schlitten 31 durch das Gehäuse 2 schräg zu der Längsachse 12a des Seilkanals 11a geführt. Gemäß einem anderen Aspekt ist der Schlitten 31 durch das Gehäuse 2 schräg zu einer Gegenwand 16 des Seilkanals 11a geführt.

In Fig. 2 ist das optionale elastische Rückstellelement 34 nicht gezeigt, um den Verschiebeweg 33 und eine Führungsnut 23, die weiter unten erklärt ist, besser darstellen zu können. In Figs. 1 und 3 ist das elastische Rückstellelement 34 abgebildet.

In der gezeigten Ausführungsform ist das elastische Rückstellelement 34 eine Spiralfeder. Das elastische Rückstellelement 34 ist zwischen dem Schlitten 31 und dem Deckelelement 3 angeordnet. An einem dem Deckelelement 3 zugewandten Ende des Schlittens 31 ist ein Haltevorsprung 38 zur Fixierung des elastischen Rückstellelements 34 ausgebildet. Das Deckelelement 3 bildet eine Wand des Innenraums an der Seite der Ausführöffnung 14. Diese Wand kann auch als Abstützwand 18 bezeichnet werden, da sich das elastische Rückstellelement 34 hieran abstützt. In der Abstützwand 18 kann eine Vertiefung zum Einstecken des elastischen Rückstellelements 34 aufweisen.

Ein Ende des Innenraums 15 an einer Seite der Einführöffnung 13 wird durch eine Endwand 19 begrenzt.

Das optionale elastische Rückstellelement 34 drückt den Schlitten 31 (mitsamt der Klemmkugel 32) entlang des Verschiebewegs 33 zu dem Seilkanal 11a hin. Die Klemmkugel 32 ist - entlang des Verschiebewegs 33 bzw. der Längsachse des Schlittens 31 gesehen - an einem Ende des Schlittens 31 angeordnet, welches von dem Deckelelement 3 abgewandt ist. Mit anderen Worten ist die Klemmkugel 32 - entlang des Verschiebewegs 33 bzw. der Längsachse des Schlittens 31 gesehen - an einem dem Seilkanal 11a zugewandten Ende des Schlittens 31 angeordnet.

Die Seildurchführung 10a ist dazu eingerichtet, dass die Klemmkugel 32 abhängig von einer Position des Schlittens 31 entlang des Verschiebewegs 33 (zumindest teilweise) in den Seilkanal 11a eintauchen kann. Genauer ist die Klemmkugel 32 in den Seilkanal 11a eingetaucht, wenn sich der Schlitten 31 in einer vorderen Position befindet. Dabei wird der Seilkanals 11a durch die Klemmkugel 32 lokal verengt. Im Detail wird ein lichter Abstand zwischen einer Gegenwand 16 des Seilkanals 11a, die dem Schlitten 31 bzw. der Klemmkugel 32 gegenüber liegt, und der Klemmkugel 32 reduziert. Dadurch kann das Seil S1, S2 zwischen der Klemmkugel 32 und der Gegenwand 16 festgeklemmt werden. Eine genaue Klemmposition hängt im Allgemeinen von einem Seildurchmesser des geklemmten Seils ab. Je geringer der Seildurchmesser ist, desto tiefer muss die Klemmkugel 32 in den Seilkanal 11a eintauchen. Entsprechend muss der Schlitten 31 mit der Klemmkugel 32 weiter vorgefahren sein.

Das optionale elastische Rückstellelement 34 sorgt dafür, dass das Seil S1, S2 automatisch festgeklemmt wird. Die Klemmkugel 32 wird durch die Wirkung des elastischen Rückstellelements 34 über den Schlitten 31 automatisch in Eingriff mit dem Seil S1, S2 gebracht und automatisch in Eingriff mit dem Seil S1, S2 gehalten (wenn das Seil S1, S2 durch den Seilkanal 11a geführt ist). Die Klemmkugel 32 wird unmittelbar an das Seil S1, S2 gedrückt. Dadurch wird das Seil S1, S2 unmittelbar an die Gegenwand 16 gedrückt. Folglich wird das Seil S1, S2 zwischen der Klemmkugel 32 und der Gegenwand 16 eingeklemmt. Diese Situation ist in Fig. 3 gezeigt.

Die Gegenwand 16 stellt zugleich einen Wandbereich des Innenraums 15 dar.

In der gezeigten Ausführungsform kann die Klemmkugel 32 unmittelbar an einer Keilwand 17 des Innenraums 15, die dem Seilkanal 11a (bzw. genauer der Gegenwand 16) gegenüber liegt, anliegen. Insbesondere ist die Seildurchführung 10a derart eingerichtet, dass sich die Klemmkugel 32 unmittelbar an der Keilwand 17 abstützt, wenn die Klemmkugel 32 an dem Seil S1, S2 anliegt.

Die Keilwand 17 verläuft schräg zu dem Seilkanal 11a. Insbesondere verläuft die Keilwand 17 schräg zu der Gegenwand 16. Ein Abstand zwischen der Keilwand 17 und der Gegenwand 16 senkrecht zu der Längsachse 12a (und in der Hauptebene H) wird, entlang der Längsachse 12a fortschreitend, zur der Einführöffnung 13 hin kleiner.

Die Keilwand 17 kann, wie in der dargestellten Ausführungsform, zur Führung des Schlittens 31 entlang des Verschiebewegs 33 beitragen. In diesem Beispiel sind an dem Schlitten 31 Auflagevorsprünge 37 ausgebildet, mit denen der Schlitten 31 an der Keilwand 17 anliegt. Durch die die Auflagevorsprünge 37 wird die Reibung des Schlittens 31 mit der Keilwand 17 reduziert. Das erleichtert die Bedienung.

Bei der dargestellten Ausführungsform verläuft die Keilwand 17 linear und mit einem gleichmäßigen Neigungswinkel gegenüber der Längsachse 12a des Seilkanals 11a. Ferner ist der Verschiebeweg 33 mit einem identischen Neigungswinkel gegenüber der Längssachse 12a des Seilkanals 11a geneigt.

Der Neigungswinkel der Keilwand 17 und/oder des Verschiebewegs 33 kann beispielsweise in einem Bereich von 3° bis 30° liegen, insbesondere in einem Bereich von 5° bis 12°.

In nicht dargestellten Ausführungsformen variiert der Neigungswinkel des Verschiebewegs 33 zur Längsachse 12a entlang des Verschiebewegs 33, beispielsweise in einem der oben genannten Winkelbereiche. Alternativ oder zusätzlich variiert der Neigungswinkel der Keilwand 17 (entlang des Verschiebewegs 33 bzw. der Längsachse 12a des Seilkanals 11a gesehen), beispielsweise in einem der oben genannten Winkelbereiche. Dabei können die Verläufe des Neigungswinkels des Verschiebewegs 33 und des Neigungswinkels der Keilwand 17 derart angepasst sein, dass sich die Klemmkugel 32 - ähnlich wie bei der dargestellten Ausführungsform - in jeder Position des Schlittens 31 unmittelbar an der Keilwand 17 abstützen kann.

Wenn versucht wird, das Seil S1, S2 in der Seildurchführung 10a gegenüber dem Gehäuse 2 entlang einer Sperrrichtung Rs dieser Seildurchführung 10a zu bewegen, beispielsweise durch eine Zugbelastung auf das Seil S1, S2 relativ zu dem Gehäuse 2, die in die Sperrrichtung Rs wirkt, dann blockiert die Seildurchführung 10a gegenüber einer entsprechenden Weiterbewegung. Das Seil S1, S2 rutscht entlang der Sperrrichtung Rs nicht durch.

In dieser Situation wird die Klemmkugel 32 durch den direkten mechanischen Kontakt zwischen der Klemmkugel 32 und dem Seil S1, S2 von dem Seil S1, S2 mitgezogen, wenn es sich relativ zu dem Gehäuse 2 in die Sperrrichtung Rs bewegt. Da der Schlitten 31 und die Klemmkugel 32 schräg zu dem Seilkanal 11a geführt sind, genauer gesagt in einem spitzen Winkel, taucht die Klemmkugel 32 weiter in den Seilkanal 11a ein. Eine Klemmkraft, mit der das Seil S1, S2 zwischen der Klemmkugel 32 und der Gegenwand 16 geklemmt wird, nimmt zu. Die Seildurchführung 10a verursacht eine Art Keilwirkung, die ein Weiterrutschen des Seils S1, S2 in die Sperrrichtung Rs verhindert.

Da die Klemmkugel 32 dabei unmittelbar an der Keilwand 17 anliegt, muss der Schlitten 31 keine Klemmkraft übertragen. Sämtliche Klemmkraft wird über die Klemmkugel 32 unmittelbar auf das Gehäuse 2 übertragen. Das verhindert, dass der Schlitten 31 sich verformen und/oder verkeilen kann.

Die Seildurchführung 10a kann durch einen Benutzer leicht entsperrt werden, indem der Schlitten 31 mittels eines Betätigungselements 35 des Schlittenmoduls 30 zurückgezogen wird, das heißt entlang des Verschiebewegs 33 von dem Seilkanal 11a weg.

In Fig. 9 ist der Schlitten 31 mit der Klemmkugel 32 in einer zurückgezogenen Position darrgestellt. Beispielsweise kann der Benutzer den Schlitten 31 mitsamt der Klemmkugel 32 entgegen einer Rückstellkraft des elastischen Rückstellelements 34 zurückgezogen haben. Die Klemmkugel 32 ist (zumindest im Wesentlichen) aus dem Seilkanal 11a herausgezogen. Das Seil S1, S2 kann in diesem Zustand sowohl entlang einer Einführrichtung Ri als auch entlang der Sperrrichtung Rs ungehindert durch die Seildurchführung 10a (und somit durch den Schlaufenbildner 1) bewegt werden.

Um das Seil S1, S2 durch die Seildurchführung 10a zu führen, wird ein Ende des Seils S1, S2 in die Einführöffnung 13 gesteckt und entlang der Einführrichtung Ri durch den Seilkanal 11a geschoben. Eine Markierung 24a auf der Vorderseite 6 des Gehäuses 2 zeigt die Einführrichtung Ri an. Das Seil S1, S2 drückt dabei die Klemmkugel 32 und den Schlitten 31 gegen die Rückstellkraft des elastischen Rückstellelements 34 zurück. Die Klemmkugel wird so weit wie nötig aus dem Seilkanal 11a aus dem Seilkanal 11a herausgedrückt. Alternativ oder zusätzlich kann der Benutzer den Schlitten 31 und damit die Klemmkugel 32 mittels des Betätigungselements 35 zurückziehen.

Da die Klemmkugel 32 beim Festklemmen des Seils S1, S2 nur mit einer kleinen Kontaktfläche an dem Seil S1, S2 anliegt und zudem nur mit einer kleinen Anlagefläche an der Keilwand 17 anliegt, kann der Schlitten 31 mit der Klemmkugel 32 auch bei starker Klemmkraft 32 sehr leicht zurückgezogen werden. Mit anderen Worten ist die Sperrung der Seildurchführung 10a entlang der Sperrrichtung Rs sehr leicht durch den Benutzer aufzuheben. Insbesondere ist es kaum möglich, dass sich die Klemmkugel 32 verkantet oder derartig festsetzt, dass der Benutzer die Sperrung nicht mehr ohne Weiteres über das Betätigungselement 35 lösen kann. Die Seildurchführung 10a stellt eine leichte und zuverlässige Bedienung sicher.

Aufgrund der Kugelform der Klemmkugel 32 ist außerdem ein Risiko reduziert, dass das Seil S1, S2 geschädigt wird. Das gilt insbesondere auch für Seile S1, S2 mit unterschiedlichen Seildurchmessern Ds1, Ds2 und wenn das Seil S1, S2 nicht optimal durch den Seilkanal 11a verläuft. Ein sicheres Sperren in der Sperrrichtung Rs sowie ein leichtes Lösen durch den Benutzer ist selbst dann sichergestellt, wenn das Seil S1, S2 nicht optimal durch den Seilkanal 11a und insbesondere durch den Klemmbereich verläuft, beispielsweise in dem Klemmbereich nicht entlang einer Hauptebene H verläuft, sondern zu einer Vorderwand 20 hin oder zu einer Hinterwand 22 hin verschoben liegt.

In der Keilwand 17 kann mindestens eine Rastausnehmung 17a ausgebildet sein, wie es beispielsweise in Fig. 9 dargestellt ist. Die Rastausnehmung 17a ist dazu eingerichtet, die Klemmkugel 32 in einer vorbestimmten Klemmposition für das Seil S1 zu stabilisieren. Ferner generiert die Rastausnehmung 17a eine haptische Rückmeldung, die der Benutzer an dem Betätigungselement 35 spürt, wenn die Klemmkugel 32 in die Rastausnehmung 17a hinein bewegt wird und wenn die Klemmkugel 32 aus der Rastausnehmung 17a heraus bewegt wird.

Die Rastausnehmung 17a kann beispielsweise die Form eines Kugelabschnitts oder eines Zylindersegments haben. Dabei kann ein Radius des Kugelabschnitts bzw. des Zylindersegments einem Radius der Klemmkugel 32 angepasst sein, beispielsweise einen Wert in einem von 80 % bis 130 % des Radius der Klemmkugel 32 haben.

Insbesondere wenn die Seildurchführung 10a für die Aufnahme von Seilen S1, S2 mit unterschiedlichen Seildurchmessern Ds1, Ds2 eingerichtet ist, können mehrere Raustausnehmungen 17a in der Keilwand 17a ausgebildet sein, beispielsweise für je eine Rastausnehmung 17a für jeden vorgesehenen Seildurchmesser Ds1, Ds2. Die Rastausnehmungen 17a können dabei teilweise überlappen.

Bevorzugt liegen der Seilkanal 11a und der Verschiebeweg 33 des Schlittens 31 derselben Seildurchführung 10a in einer gemeinsamen Ebene, die als "Hauptebene" H der jeweiligen Seildurchführung 10a bezeichnet wird. Die Hauptebene H ist in Fig. 5 eingezeichnet.

Die Klemmkugel 32 kann so geführt sein, dass sie sich (unabhängig von ihrer Position entlang des Verschiebewegs 33) stets in der Hauptebene H der zugehörigen Seildurchführung 10a befindet. Insbesondere kann die Klemmkugel 32 so geführt sein, dass sich ihr Mittelpunkt C0 stets in der Hauptebene H der zugehörigen Seildurchführung 10a befindet.

Die Klemmkugel 32 kann als Vollkugel oder als Hohlkugel ausgebildet sein. Bei der gezeigten Ausführungsform ist die Klemmkugel 32 jeweils eine Vollkugel. Die Klemmkugel 32 kann aus einem metallischen Material, beispielsweise aus Aluminium, Messing, Kupfer, und/oder Edelstahl, und/oder aus nicht-metallischem Material wie Kunststoff und/oder Keramik. Die Klemmkugel 32 kann alternativ oder zusätzlich aus Verbundwerkstoff, wie beispielsweise Carbon, gefertigt sein.

Eine Oberfläche der Klemmkugel 32 kann glatt sein. Dadurch kann die Klemmkugel 32 besonders leicht an dem Seil S1, S2 und/oder der Keilwand 17 abrollen. Das erleichtert dem Benutzer das Aufheben der Sperrung. Zudem senkt die glatte Oberfläche das Risiko einer Beschädigung des Seils S1, S2.

In der gezeigten Ausführungsform ist die Klemmkugel 32 schwimmend durch den Schlitten 31 geführt. Die Klemmkugel 32 kann sich relativ zu dem Schlitten 31 beliebig drehen, also um jede beliebige Achse durch den Mittelpunkt C0 der Klemmkugel 32.

Der Schlitten 31 ist über das Betätigungselement 35 durch den Benutzer verschiebbar. Das Betätigungselement 35 ist über eine Verbindung, die sich durch einen Schlitz 21 in der Vorderwand 20 des Innenraums 15 erstreckt, mit dem Schlitten 31 verbunden. In dieser Ausführungsform ist das Betätigungselement 35 einstückig mit dem Schlitten 31 ausgebildet. Das Betätigungselement 35 kann als Vorsprung des Schlittens 31 betrachtet werden, der durch den Schlitz 31 durchgeführt ist und auf der Vorderseite 6 des Gehäuses 2 durch den Benutzer betätigbar ist.

Die Vorderwand 20 begrenzt den Innenraum 15 entlang einer Normalenrichtung zur Hauptebene H. In der dargestellten Ausführungsform kann eine Mittelachse M zugleich als Normalenrichtung herangezogen werden.

Der Schlitz 21 in der Vorderwand 20 des Innenraums 15 hat eine Doppelfunktion. Einerseits dient er zur Durchführung der Verbindung zwischen dem Betätigungselement 35 und dem Schlitten 31. Zugleich dient ein Eingriff der Verbindung zwischen dem äußeren Teil des Betätigungselements 35 an der Vorderseite 6 und dem Schlitten 31 (bspw. ein Verbindungssteg) mit dem Schlitz 21 dazu, den Schlitten 31 entlang des Verschiebewegs 33 zu führen.

In einer Hinterwand 22 des Innenraums 15, welche der Vorderwand 20 gegenüber liegt (welche das andere Ende des Innenraums 15 entlang der Mittelachse M bildet), ist eine Führungsnut 23 ausgebildet. Ein Führungsvorsprung 36 des Schlittens 31 greift in die Führungsnut 23 ein. Die Führungsnut 23 dient zur Führung des Schlittens 31 entlang des Verschiebewegs 33.

In der vorliegenden Ausführungsform wird der Schlitten 31 deshalb beidseitig von der Führungsnut 23 und dem Schlitz 21 geführt, zusätzlich durch die Anlage an der Keilwand 17.

In Fig. 8 ist ein besonderes Profil der Gegenwand 16 besonders deutlich. In der gezeigten Ausführungsform weist die Gegenwand 16 des Seilkanals eine gerundete Anlagefläche 40. In einem Querschnitt quer zu der Längsachse 12a des Seilkanals 11a gesehen ist in der Mitte der gerundeten Anlagefläche 40 (als an der Hauptebene H) zusätzlich eine kleinere, gerundete Nut 41 ausgebildet. Die kleinere, gerundete Nut 41 ist stärker gerundet als die Anlagefläche 40. Übergangsbereiche 42 zwischen der kleineren, gerundeten Nut 41 und der Anlagefläche 40 (mit anderen Worten die Nutränder der kleineren, gerundeten Nut 41) sind abgerundet, insbesondere konvex abgerundet. Das verringert ein Risiko, dass das Seil S1, S2 durch den Übergangsbereich beschädigt wird.

Aufgrund dieses besonderen Profils eignet sich die Seildurchführung 10a besonders gut für Seile S1, S2 mit unterschiedlichen Seildurchmessern Ds1 und Ds2.

Das dickere Seil S1, beispielsweise mit dem Seildurchmesser Ds1 von 3 mm, liegt stärker an der gerundeten Anlagefläche 40 an. Ein dünneres Seil S2, beispielsweise mit einem kleineren Seildurchmesser Ds2 von 2 mm, liegt stärker an der kleineren, gerundeten Nut 41 an.

Zudem hilft die kleinere, gerundete Nut 41 dabei, dass das verwendete Seil S1, S2 - unabhängig davon, ob es sich um das dünnere Seil S2 oder das dickere Seil S1 handelt - in der idealen Position zwischen der Gegenwand 16 und der Klemmkugel 32 positioniert wird.

Bei der dargestellten Ausführungsform hat die gerundete Anlagefläche 40 eine Form ähnlich einem Teilabschnitt einer Ellipse. Die kleinere, gerundet Nut 41 hat dagegen eine zylindersegmentförmige Grundform, beispielsweise mit einem Krümmungsradius von 0,5 mm.

Die die gerundete Anlagefläche 40 kann durch eine größere, gerundete Nut ausgebildet sein.

Gemäß einem weiteren Aspekt ist das besondere Profil der Gegenwand 16 zumindest in einem Bereich der Gegenwand 16 ausgebildet, in welchem das Seil S1, S2 zwischen der Klemmkugel 32 und der Gegenwand 16 eingeklemmt wird. In der gezeigten Ausführungsform ist das besondere Profil entlang der gesamten Länge der Gegenwand 16 ausgebildet und deshalb auch an der in Fig. 8 gezeigten Einführöffnung 13 gut sichtbar.

Wie weiter oben erwähnt ist, weist der Schlaufenbildner 1 zwei Seilführungen 10a, 10b auf, nämlich die erste Seildurchführung 10a und die zweite Seildurchführung 10b.

Die zwei Seildurchführungen 10a, 10b sind gegenläufig symmetrisch in dem Gehäuse 2 angeordnet. Das heißt, die Seilkanäle 11a, 11b der zwei Seildurchführungen 10a, 10b erstrecken sich parallel zueinander, aber die Sperrrichtungen Rs der zwei Seildurchführungen 10a, 10b sind umgekehrt orientiert. Mit anderen Worten sind die beiden Seildurchführungen 10a, 10b antiparallel angeordnet.

Im Detail wird aus Fig. 1 ersichtlich, dass die Seilkanäle 11a, 11b der zwei Seildurchführungen 10a, 10b, und insbesondere die Längsachsen 12a, 12b der Seilkanäle 11a, 11b, parallel zueinander in einer gemeinsamen Hauptebene H verlaufen. In der dargestellten Ausführungsform erstrecken sich auch die Verschiebewege 33 der Schlittenmodule 30 der beiden Seildurchführungen 10a, 10b in der gemeinsamen Hauptebene H. Die gemeinsame Hauptebene H entspricht der in Fig. 1 gezeigten Schnittebene. Mit anderen Worten fallen die Hauptebenen H der zwei Seildurchführungen 10a, 10b zusammen. Folglich wird für die Hauptebenen der einzelnen Seildurchführungen 10a, 10b und die gemeinsame Hauptebene dasselbe Bezugszeichen H verwendet.

Ferner ist die zweite Seildurchführung 10b gegenüber der ersten Seildurchführung 10b um 180° bezüglich der Mittelachse M gedreht angeordnet. Die Mittelachse M verläuft senkrecht zu der Hauptebene H und mittig zwischen den Seilkanälen 11a, 11b. Die Seilkanäle 11a, 11b liegen jeweils zwischen dem zugehörigen Schlittenmodul 30 und der Mittelachse M.

Um eine Schlaufe aus dem Seil S1, S2 zu bilden, wird ein Ende des Seils S1, S2 beispielsweise zunächst durch die erste Seildurchführung 10a gesteckt (siehe Markierung 24a auf der Vorderseite für die Einführöffnung 13 und die Einführrichtung Ri der ersten Seildurchführung 10a). Dann wird dasselbe Ende des Seils S1, S2 antiparallel durch die zweite Seildurchführung 10b gesteckt (siehe Markierung 24b auf der Vorderseite 6 für die Einführöffnung 13 und die Einführrichtung Ri der zweiten Seildurchführung 10b). Der Teil des Seils S1, S2 zwischen der Ausführöffnung 14 der ersten Seildurchführung 10a und der Einführöffnung 13 der zweiten Seildurchführung 10b bildet eine Schlaufe. Mittels der Schlaufe kann das Seil S1, S2 mitsamt dem Schlaufenbildner 1 aufgehängt werden. Die Schlaufe kann beispielsweise über eine Haltestange, durch eine Halteöse, durch ein Kettenglied, über ein anderes Seil, über einen Haken oder dergleichen geführt sein. Die beiden Seildurchführungen 10a, 10b mit antiparallelen Sperrrichtungen Rs verhindern, dass sich die Schlaufe unbeabsichtigt vergrößert oder gar das freie Ende des Seils S1, S2 unbeabsichtigt aus der zweiten Seildurchführung 10b herausrutscht. Der Schlaufenbildner 1 ermöglicht somit eine sichere Aufhängung.

Wenn die Schlaufe des Seils S1, S2 gelöst werden soll, kann der Benutzer mittels des Betätigungselements 35 der zweiten Seildurchführung 10b die Sperrwirkung der zweiten Seildurchführung 10b aufheben. Das freie Ende des Seils S1, S2 kann entlang deren Sperrrichtung Rs durch die zweite Seildurchführung 10b aus dem Schlaufenbildner 1 herausgezogen werden. Dadurch wird die Schlaufe geöffnet. Das Seil S1, S2 und der Schlaufenbildner 1 können von der Aufhängung abgenommen werden.

Natürlich kann andererseits ein Ende des Seils S1, S2 an einer oberen Position (entlang der Richtung der Schwerkraft gesehen) befestigt sein. Dann kann mittels des Schlaufenbildners 1 mit dem unteren, freien Ende des Seils S1, S2 eine Schlaufe zum Halten gebildet werden.

Durch die gegenläufig symmetrische Anordnung der zwei Seildurchführungen 10a, 10b ist sichergestellt, dass der Schlaufenbildner 1 optisch stets lotrecht hängt, und zwar unabhängig von einer auf das Seil wirkenden Zugkraft. Das ist einerseits ästhetisch vorteilhaft. Andererseits ist dadurch sichergestellt, dass die Orientierungen der Betätigungselemente 35 sowie deren Bedienungsrichtungen stets gleich sind. Das erhöht die Bediensicherheit.

Im Allgemeinen kann es vorkommen, dass sich die aus dem Seil S1, S2 gebildete Schlaufe direkt an dem Schlaufenbildner 1 stark aufweitet. Beispielsweise läuft das Seil S1, S2 dann nicht im Wesentlichen lotrecht, sondern in einem Winkel schräg zur Richtung der Schwerkraft aus der Ausführöffnung 14 der ersten Seildurchführung 10a heraus; entsprechend läuft das Seil S1, S2 nicht im Wesentlichen lotrecht, sondern in einem Winkel schräg zur Richtung der Schwerkraft in die Einführöffnung 13 der zweiten Seildurchführung 10b hinein. Aufgrund der gegenläufig symmetrischen, antiparallelen Anordnung der zwei Seildurchführungen 10a, 10b hängt der Schlaufenbildner 1 auch in dieser Situation lotrecht. Wenn das Seil S1, S2 auf Zug beansprucht wird, drückt das Seil S1, S2 in diesem Fall seitlich an das Deckelement 3 der ersten Seildurchführung 10a. Die seitlichen Kraftkomponenten werden auf das Gehäuse 2 übertragen.

Der optionale Sicherungsstift 4 dient zur zusätzlichen Übertragung solcher Kräfte auf den Grundkörper des Gehäuses 2. In Fig. 6 ist gut erkennbar, wie der Sicherungsstift in den Grundkörper eingesetzt ist und sich durch das Deckelelement 3 erstreckt.

In einer (nicht gezeigten) Modifikation sind die äußeren Ränder der Einführöffnungen 13 und der Ausführöffnungen 14 abgerundet. Das vermeidet Beschädigungen des Seils S1, S2 beim Einstecken und Herausziehen durch scharfe Außenkanten der Einführöffnungen 13 und der Ausführöffnungen 14. Zudem ist die Gefahr einer Beschädigung des Seils durch derartige Außenkanten verringert, wenn sich die aus dem Seil S1, S2 gebildete Schlaufe unmittelbar an dem Schlaufenbilder 1 stark aufweitet.

Übrigens ist der Schlaufenbildner 1 für einen sehr großen Bereich von Winkelorientierungen an den Einführöffnungen 13 und Ausführöffnungen 14 sicher und zuverlässig einsetzbar. Das Seil S1, S2 wird in den Seilkanälen 11a, 11b parallel geführt und die eigentliche Klemmung findet im Inneren des Gehäuses 2 ausreichend beabstandet von den Einführöffnungen 13 und den Ausführöffnungen 14 statt (beispielsweise in einem Abstand, der mindestens dem 2,0-fachen des größten erlaubten Seildurchmessers entspricht). Selbst wenn die Einführöffnungen 13 und/oder die Ausführöffnungen 14 abgerundet sind, verläuft das Seil S1, S2 in dem Klemmbereich parallel zu der Längsachse 12a, 12b des jeweiligen Seilkanals 11a, 11b. Lasten des Seils S1, S2 quer zu der Längsachse 12a, 12b werden im Bereich der Einführöffnung 13 bzw. Ausführöffnung 14 vollständig durch das Gehäuse 2 aufgenommen und wirken nicht im Klemmbereich, beispielsweise nicht auf die Klemmkugel 32.

Anhand der Figs. 4 bis 6 ist ersichtlich, dass die Betätigungselemente 35 der Schlittenmodule 30 der zwei Seildurchführungen 10a, 10b an der Vorderseite 6 des Gehäuses 2 angeordnet sind. Dabei sind die beiden Betätigungselemente 35 in einer gemeinsamen Ebene, die parallel zu der Hauptebene H verläuft, angeordnet und bewegbar. Die zwei Schlittenmodule 30 können deshalb von der Vorderseite 6 aus bedient werden.

Zusätzlich sind die beiden Betätigungselemente 35 in leicht vertieften Bereichen 7 der Vorderseite 6 angeordnet. Das erleichtert das Ertasten der Betätigungselemente 35. Eine Kante des jeweiligen vertieften Bereichs 7, die parallel zu dem zugehörigen Schlitz 21 verläuft, zeigt dem Benutzer (zusätzlich zu dem Schlitz) haptisch eine Verschieberichtung des Betätigungselement 35 an.

Die Betätigungselemente 35 stehen seitlich (senkrecht zu der Mittelachse M) nicht über das Gehäuse 2 heraus. Das verringert das Risiko, dass die Betätigungselement 35 unabsichtlich betätigt werden, beispielsweise durch den Nutzer selbst oder wenn der Schlaufenbildner 1 durch Wind, nicht lotrechte Belastungen, Schwingungen oder aus sonstigen Gründen mit einem anderen Element in Berührung kommt.

Wenn die vertieften Bereiche 7 stark vertieft sind, wird das Risiko des unbeabsichtigten Lösens der Sperrungen weiter reduziert.

Ein Abstand der Seilkanäle 11a, 11b der zwei Seildurchführungen 10a, 10b beträgt beispielsweise mindestens das 1,5-fache des größten erlaubten Seildurchmessers, insbesondere mindestens das 2-fache. Das sorgt für ausreichende Stabilität des Gehäuses 2.

Der Grundkörper des Gehäuses 2 ist in der dargestellten Ausführungsform aus Metall gefertigt, beispielsweise aus einer Zink-Legierung. Insbesondere kann es aus einer Zamak-Legierung gefertigt sein. Der Grundkörper kann mittels Druckguss hergestellt sein.

Die zwei Deckelelemente 3 können aus dem gleichen Material wie der Grundkörper und/oder aus einem anderen Material gefertigt sein.

Die Sicherungsstifte 4 können aus dem gleichen Material wie der Grundkörper und/oder aus einem anderen Material gefertigt sein.

Das Gehäuse 2 bzw. einzelne Bestandteile davon (Grundkörper, Deckelemente 3 und/oder Sicherungsstifte 4) können vernickelt sein.

Das Gehäuse 2 weist eine scheibenförmige Grundgestalt aus. Dabei kann eine Umfangswand gewölbt sein, beispielsweise konvex ausgewölbt sein (siehe Figs. 5 und 6). Alternativ oder zusätzlich können die Vorderseite 6 und/oder die Rückseite 8 gewölbt sein, beispielsweise konvex ausgewölbt sein.

Das Gehäuse 2 ist hier flächig ausgebildet. Eine Dicke des Gehäuses 2 (parallel zur Mittelachse M) beträgt weniger als das 0,4-fache eines Durchmessers des Gehäuses 2 in der Hauptebene H.

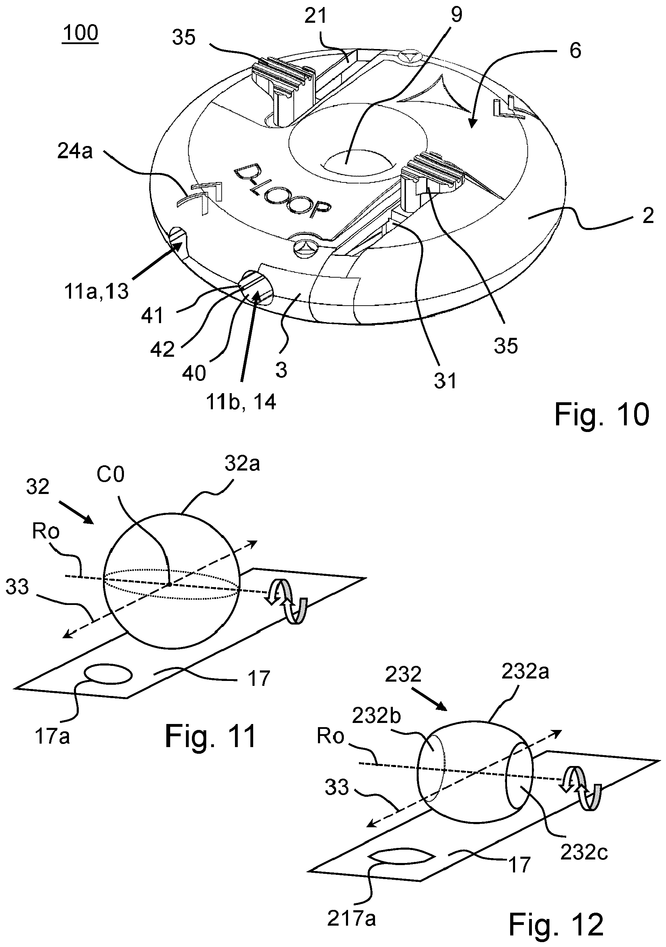

Fig. 10 zeigt eine zweite erfindungsgemäße Ausführungsform eines Schlaufenbildners 100. Der Aufbau und die Funktionsweise sind im Wesentlichen identisch zum Schlaufenbildner 1 und werden deshalb nicht erneut beschrieben. Gleiche Elemente sind mit den gleichen Bezugszeichen beschrieben.

Ein Unterschied besteht darin, dass in dem Schlaufenbildner 100 ein Durchgangsloch 9 in dem Gehäuse 2 ausgebildet ist. Das Durchgangsloch 9 ist zwischen den beiden Seilkanälen 11a, 11b der beiden Seildurchführungen 10a, 10b angeordnet. Das Durchgangsloch 9 ist hier zentral in dem Gehäuse 2 angeordnet, insbesondere koaxial zu der Mittelachse M. Es erstreckt sich von der Vorderseite 6 zu der (in Fig. 10 nicht gezeigten) Rückseite.

Das Durchgangsloch 9 kann zur Befestigung des Schlaufenbildners 100 dienen. Zum Beispiel kann eine Schraube durch das Durchgangsloch 9 gesteckt werden, um den Schlaufenbildner 100 an einem Wandbefestiger zu montieren. Ferner kann der Schlaufenbilder 100 mit dem Durchgangsloch 9 auf eine Haltestange aufgesteckt werden, beispielsweise auf eine Gewindestange. Die Haltestange kann wiederum anderweitig befestigt sein. Alternativ oder zusätzlich kann der Schlaufenbildner 100 mittels seines Durchgangslochs 9 auf ein Tragseil (z.B. ein weiteres Drahtseil) aufgesteckt werden.

Da das Durchgangsloch 9 zentral in dem Gehäuse 2 ausgebildet ist und zwischen den beiden Seilkanälen 11a, 11b angeordnet ist, können Lasten des durch die Seilkanäle geführten Seils S1, S2 gegebenenfalls sehr einfach, sicher und symmetrisch auf ein durch das Durchgangsloch 9 geführtes Halteelement (bspw. die Haltstange der das Tragseil) übertragen werden.

Die zentrale, mittige Anordnung im Symmetriepunkt stellt sicher, dass der Schlaufenbildner 100 genau vertikal (optisch lotrecht) hängt. In diesem Zusammenhang bedeutet dies, dass die beiden Seilkanäle 11a, 11b beide parallel zu einer Richtung der Schwerkraft ausgerichtet sind.

Davon abgesehen kann das Durchgangsloch 9 genutzt werden, um den Schlaufenbildner 100 auf einer Stange, einem Ring, oder einem Seil aufzureihen. Das erleichtert die Handhabung und den Transport, wenn der Nutzer mehrere Schlaufenbildner 100 hintereinander montieren und/oder demontieren möchte. Mehrere Schlaufenbildner 100 können zum Transport gemeinsam auf die Stange, den Ring, oder das Transportseil aufgesteckt werden, um ein Transport-Paket zu bilden.

Die Schlaufenbildner 1 und 100 können jeweils zusätzlich eine Verriegelung für eines oder beide der Schlittenmodule 30 aufweisen (nicht gezeigt). Die Verriegelung verhindert, dass der jeweilige Schlitten 31 unbeabsichtigt zurückgezogen oder zurückgeschoben werden kann. Beispielsweise kann ein von dem Nutzer lösbarer Schnappverschluss das entsprechende Betätigungselement 35 gegen Zurückschieben sichern. Der Nutzer muss erst den Schnappverschluss lösen, bevor das Betätigungselement 35 zurückgeschoben werden kann.

Hier sind die Wände des Durchgangsloch 9 abgerundet. Das erleichtert das Aufstecken des Schlaufenbildners 100. Wenn der Schlaufenbildner 100 auf ein Tragseil aufgesteckt ist, kann das Tragseil nicht durch Kanten des Durchgangsloch beschädigt werden.

Ansonsten unterscheidet sich der Schlaufenbildner 100 von dem Schlaufenbildner 1 dadurch, dass die Umfangswand des Gehäuses 1 stärker konvex ausgewölbt ist. Anders ausgedrückt sind die Außenkanten der scheibenförmigen Grundform stärker abgerundet.

Fig. 11 zeigt schematisch die Klemmkugel 32, die in den Schlitten 30 der Seildurchführungen 10a, 10b der zuvor beschriebenen Schlaufenbildner 1 und 100 jeweils als rollendes Klemmelement verwendet wird. Es ist symbolisch angedeutet, dass die Klemmkugel 32 zumindest um eine Rotationsachse Ro rollbar ist. Die Rotationsachse Ro ist senkrecht zu dem Verschiebeweg 33. Ferner liegt die Rotationsachse Ro stets (also unabhängig von der Position des Verschiebewegs 33) senkrecht zu der Hauptebene H und parallel zur Mittelachse M, wobei die Hauptebene H und die Mittelachse M in Fig. 11 nicht gezeigt sind. In Fig. 11 ist die Hauptebene H die Ebene, in welcher der Verschiebeweg 33 sowie der Mittelpunkt C0 liegen und welche senkrecht auf der Rotationsachse R0 steht. Insbesondere kann die Klemmkugel 32 um ihre Rotationsachse Ro drehen, wenn sie entlang des Verschiebewegs 33 von dem Schlitten 30 mitgeführt wird. Durch das Mitführen der Klemmkugel 32 entlang des Verschiebewegs 33 wird deren Rotationsachse Ro mit entlang des Verschiebewegs 33 verschoben.

Die Klemmkugel 32 ist rotationssymmetrisch bezüglich ihrer Rotationsachse Ro.

Eine Umfangsfläche 32a der Klemmkugel 32 umgibt die Rotationsachse Ro der Klemmkugel 32. Die Umfangsfläche 32a kann auch als Seitenwand der Klemmkugel 32 bezüglich ihrer Rotationsachse Ro angesehen werden.

Die Umfangsfläche 32a, genauer gesagt ein entlang der Rotationsrichtung R der Klemmkugel 32 gesehen mittlerer Teil der Umfangsfläche 32a, dient als Abrollfläche. Damit kann die Klemmkugel 32 an der Keilwand 17 bzw. an dem Seil S1, S2 abrollen. Wenn die Klemmkugel 32 mit ihrer Umfangsfläche 32a (genauer mit der Abrollfläche) abrollt, dreht sich die Klemmkugel 32 sich um ihre Rotationsachse Ro.

Zumindest ein Teil der Umfangsfläche 32a liegt beim Klemmen des Seils S1, S2 an dem Seil S1, S2 an. Ebenso liegt zumindest ein Teil der Umfangsfläche 32a beim Klemmen des Seils S1, S2 an der Keilwand 17 an.

Es versteht sich von selbst, dass die Umfangsfläche 32a entlang der Rotationsachse Ro zur Mitte der Klemmkugel 32 hin konvex nach außen gewölbt ist.

In einer nicht dargestellten Modifikation wird anstelle der gezeigten Klemmkugel 32 eine Klemmkugel als rollbares Klemmelement mit einer Grundform benutzt, bei welcher ein Kugelabschnitt an einem ersten Ende entlang ihrer Rotationsachse weggelassen ist. Zusätzlich kann auch ein Kugelabschnitt an einem zweiten Ende entlang ihrer Rotationsachse weggelassen sein. Mit anderen Worten hat das rollbare Klemmelement dann die Gestalt einer Kugelschicht. Ein Krümmungsmittelpunkt soll in einem Inneren der Kugelschicht angeordnet sein. Insbesondere kann es sich um eine um einen Krümmungsmittelpunkt symmetrische Kugelschicht handeln.

Auch in diesem Fall ist die Umfangsfläche entlang der Rotationsachse zur Mitte der Kugelschicht hin konvex nach außen gewölbt.

Diese Modifikation ermöglicht bei gleicher Größe entlang der Rotationsachse ein größerer Krümmungsradius der Umfangsfläche in jeder Querschnittsebene, in welcher die Rotationsachse verläuft.

Fig. 12 zeigt eine weitere mögliche Ausführungsform für ein rollbare Klemmelement. In Fig. 12 ist hat das rollbare Klemmelement 232 die Grundform eines bauchigen Fasses. Im Folgenden werden nur besondere Unterschiede zur Klemmkugel 32 betrachtet. Ansonsten entsprechen die Merkmale, Funktionen, Modifikation und Bezugszeichen denjenigen der Klemmkugel 32.

Die Grundform des rollbaren Klemmelements 232 unterscheidet von einer zylindrischen Grundform dadurch, dass eine Umfangsfläche 232a entlang der Rotationsachse Ro zur Mitte des rollbaren Klemmelements 232 hin konvex nach außen gewölbt ist. Hierbei besteht ein noch größerer Freiraum, um die Krümmung der Umfangsfläche 232a in jeder Querschnittsebene, in welcher die Rotationsachse Ro verläuft, zu optimieren.

Die Form der Rastausnehmung 217a ist entsprechend angepasst.

Stirnseiten 232b und 232c stellen Endflächen entlang der Rotationsachse Ro dar. Sie können flach ausgebildet sein.

In jeder der genannten Modifikationen ist die konvexe Auswölbung der Umfangsfläche 32a, 232a ausgebildet. Sie vermindert das Risiko eines Verklemmens und erleichtert die Bedienung.

Die beiden Schlaufenbildner 1 und 100 sind einfach aufgebaut, kostengünstig herstellbar, sicher und leicht zu bedienen. Zum Sperren und Entsperren ist kein Werkzeug notwendig. In Verwendung hängen sie optisch lotrecht. Sie sind mit einer einzigen Hand bedienbar. Die Betätigungselemente 35 sind beide auf der Vorderseite 6 angeordnet, genauer in einer Ebene. Das ermöglicht eine einfache und sichere Handhabung. Insbesondere können die Schlaufenbildner 1 und 100 auch mit der Rückseite 8 an einer Wand oder einem Gegenstand anliegen und sind dennoch vollständig operabel. Die einzigen beweglichen Teile sind die Schlittenmodule 30. Daher sind die Schlaufenbildner 1 und 100 sehr zuverlässig. Wenn das Gehäuse 2 und die Klemmkugeln 32 (bzw. die alternativen Modifikationen der rollbaren klemmenden Elemente) aus Metall gefertigt sind und die Klemmkugeln 32 (bzw. die alternativen Modifikationen der rollbaren klemmenden Elemente) beim Klemmen des Seils S1, S2 direkt an dem Gehäuse 2 (genauer der Keilwand 17) anliegen, können hohe Lasten aufgenommen werden. Beispielsweise können für Stahlseile mit zulässigen Lasten von 2300 N/mm² Arbeitslasten von 50 kg für ein Stahlseil mit einem Durchmesser von 2,0 mm 85 kg für ein Stahlseil mit einem Durchmesser von 2,00 mm bis 3,00 mm realisiert werden. Zudem weisen die Schlaufenbildner 1 und 100 eine kompakte und schlanke Bauweise auf.

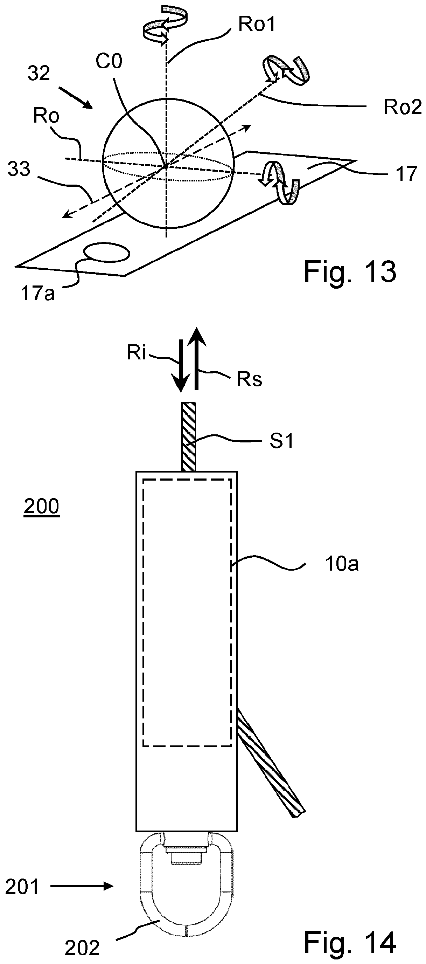

Wie schon weiter oben beschrieben wurde, ist die Klemmkugel 32 in der gezeigten Ausführungsform schwimmend durch den Schlitten 31 geführt. Die Klemmkugel 32 kann sich relativ zu dem Schlitten 31 beliebig drehen, also nicht nur im die in Fig. 12 gezeigte Rotationsachse Ro, sondern um jede beliebige Achse durch den Mittelpunkt C0 der Klemmkugel 32. In Fig. 13 sind exemplarisch mögliche weitere Rotationsachsen Ro1 und Ro2 eingezeichnet.

Fig. 14 zeigt schematisch eine Seitenansicht eines Drahtseilhalters 200. An einem unteren Ende des Drahtseilhalters 200 ist eine Ösengruppe 201 mit einer Öse 202 angebracht. Die Öse 202 kann um eine Längsachse des Drahtseilhalters 200 drehbar sein. Die Ösengruppe 201 kann beispielsweise in ein Innengewinde an einem unteren Ende des Drahtseilhalters 200 eingeschraubt sein, das optional auch andere Koppelteile aufnehmen kann.

Der Drahtseilhalter 200 umfasst eine Seildurchführung 10a gemäß Fig. 2. In dieser Ausführungsform muss lediglich die Austrittsöffnung (Bezugszeichen 14 in Fig. 2, nicht gezeigt in Fig. 14) an eine Seitenfläche des Drahtseilhalters 200 versetzt werden, da sich am unteren Ende des Drahtseilhalters 200 die Öse 201 befindet. In anderen Ausführungsformen kann der Drahtseilhalter auch einen geraden Seildurchgang aufweisen.

In Fig. 14 wird das Seil S1 von oben entlang der Einführrichtung Rᵢ in den Drahtseilhalter 200 eingeführt.

In anderen Ausführungsformen können statt der Ösengruppe 201 beliebige andere Lasthaltevorrichtungen und/oder Lasten an dem Drahtseilhalter 200 befestigt sein, beispielsweise ein Haken, eine Traverse, etc.

### Bezugszeichen:

- 1, 100: Schlaufenbildner
- 2: Gehäuse
- 3: Deckelelement
- 4: Sicherungsstift
- 5: Kopf
- 6: Vorderseite
- 7: vertiefter Bereich
- 8: Rückseite
- 9: Durchgangsloch
- 10a, 10b: Seildurchführung
- 11a, 11b: Seilkanal
- 12a, 12b: Längsachse
- 13: Einführöffnung
- 14: Ausführöffnung
- 15: Innenraum
- 16: Gegenwand
- 17: Keilwand
- 17a: Rastausnehmung
- 18: Abstützwand
- 19: Endwand
- 20: Vorderwand
- 21: Schlitz
- 22: Hinterwand
- 23: Führungsnut
- 24a, 24b: Markierung
- 30: Schlittenmodul
- 31: Schlitten
- 32: Klemmkugel
- 33: Verschiebeweg
- 34: elastisches Rückstellelement
- 35: Betätigungselement
- 36: Führungsvorsprung
- 37: Auflagevorsprung
- 38: Haltevorsprung
- 40: gerundete Anlagefläche
- 41: kleinere, gerundete Nut
- 42: Übergangsbereich
- 200: Drahtseilhalter
- 201: Ösengruppe
- 202: Öse
- C0: Mittelpunkt
- Ds1, Ds2: Seildurchmesser
- H: Hauptebene
- M: Mittelachse (Normalenrichtung)
- Ro: Rotationsachse
- Ro1, Ro2: weitere Rotationsachsen
- Ri: Einführrichtung
- Rs: Sperrrichtung
- S1, S2: Seil

## Patentansprüche

1. Seildurchführung (10a, 10b), insbesondere für einen Schlaufenbildner (1, 100) oder Drahtseilhalter (200), zum Durchführen eines Seils (S1, S2) durch ein Grundmodul (2) und zum Sichern des Seils (S1, S2) gegen Durchrutschen entlang einer Sperrrichtung (Rs), umfassend
einen Seilkanal (11a, 11b) zum Hindurchstecken des Seils (S1, S2) und
ein Schlittenmodul (30) mit einem Schlitten (31), welcher durch das Grundmodul (2) schräg zu dem Seilkanal (11a, 11b) verschiebbar geführt ist,
wobei das Schlittenmodul (30) ferner ein rollbares Klemmelement (32, 232) zum Einklemmen des Seils (S1, S2) zwischen dem rollbaren Klemmelement (32, 232) und einer Gegenwand (16) des Seilkanals (11a, 11b) umfasst, wobei der Schlitten (31) das rollbare Klemmelement (32, 232) entlang seines Verschiebewegs (33) mitführt,
**dadurch gekennzeichnet, dass** eine Umfangsfläche (32a, 232a) des rollbaren Klemmelements (32, 232), die eine Rotationsachse (Ro) des rollbaren Klemmelements (32, 232) umgibt, entlang der Rotationsachse (Ro) zur Mitte des rollbaren Klemmelements (32, 232) hin konvex nach außen gewölbt ist.

2. Seildurchführung (10a, 10b) nach Anspruch 1, **dadurch gekennzeichnet, dass** das rollbare Klemmelement als Klemmkugel (32) ausgebildet ist.

3. Seildurchführung (10a, 10b) nach Anspruch 2, **dadurch gekennzeichnet, dass** die Klemmkugel (32) relativ zu dem Schlitten (31) um ihren Mittelpunkt (C0) beliebig rotierbar ist.

4. Seildurchführung (10a, 10b) nach einem der vorhergehenden Ansprüche, **dadurch gekennzeichnet, dass** die Gegenwand (16) des Seilkanals (11a, 11b) zumindest in einem Klemmbereich, welcher zum Klemmen des Seils (S1, S2) zwischen dem rollbaren Klemmelement (32, 232) und der Gegenwand (16) eingerichtet ist, eine gerundete Anlagefläche (40) aufweist.

5. Seildurchführung nach Anspruch 4, **dadurch gekennzeichnet, dass** ein Profil der gerundeten Anlagefläche (40) entlang einer Längsachse des Seilkanals (11a, 11b) in dem Klemmbereich variiert.

6. Seildurchführung (10a, 10b) nach Anspruch 4 oder 5, **dadurch gekennzeichnet, dass** in der gerundeten Anlagefläche (40) zusätzlich eine kleinere, gerundete Nut (41) ausgebildet ist, die stärker gekrümmt ist als die gerundete Anlagefläche (40).

7. Seildurchführung nach Anspruch 6, **dadurch gekennzeichnet, dass** ein Profil der kleineren, gerundeten Nut (41) entlang der Längsachse (12a, 12b) des Seilkanals (10a, 10b) in dem Klemmbereich variiert.

8. Seildurchführung (10a, 10b) nach einem der vorhergehenden Ansprüche, **dadurch gekennzeichnet, dass** die Seildurchführung (10a, 10b) dazu eingerichtet ist, dass sich das rollbare Klemmelement (32, 232) beim Klemmen des Seils (S1, S2) unmittelbar an dem Grundmodul (2) abstützt.

9. Seildurchführung (10a, 10b) nach einem der vorhergehenden Ansprüche, **dadurch gekennzeichnet,**
**dass** die Längsachse (12a, 12b) des Seilkanals (11a, 11b) und der Verschiebeweg (33) in einer Hauptebene (H) liegen,
wobei sich der Seilkanal (11a, 11b) durch einen Innenraum (15) des Grundmoduls (2) erstreckt, in welchen der Schlitten (31) sowie das rollbare Klemmelement (32, 232) aufgenommen sind,
wobei der Innenraum (15) entlang einer Normalenrichtung (M), die senkrecht zu der Hauptebene (H) steht, durch eine Vorderwand (20) begrenzt ist, und
wobei ein Betätigungselement (35) für den Schlitten (31) an einer Vorderseite (6) des Grundmoduls (2) angeordnet ist und über eine Verbindung, die sich durch einen Schlitz (21) in einer Vorderwand (20) erstreckt, mit dem Schlitten (31) verbunden ist.

10. Seildurchführung (10a, 10b) nach Anspruch 9, **dadurch gekennzeichnet, dass** eine Rückwand (22) des Innenraums (15), welche der Vorderwand (20) mit dem Schlitz (21) gegenüber liegt, eine Führungsnut (23) zur Führung des Schlittens (31) entlang des Verschiebewegs (33) aufweist.

11. Schlaufenbildner (1, 100) zur Bildung einer Schlaufe aus einem Seil (S1, S2), umfassend ein Grundmodul (2) mit einer ersten Seildurchführung (10a) und einer zweiten Seildurchführung (10b),
**dadurch gekennzeichnet, dass** die erste Seildurchführung (10a) nach einem der vorhergehenden Ansprüche ausgebildet ist und dass die zweite Seildurchführung (10b) nach einem der vorhergehenden Ansprüche ausgebildet ist.

12. Schlaufenbildner (1, 100) nach Anspruch 11, **dadurch gekennzeichnet, dass** Betätigungselemente (35) der Schlittenmodule (30) der ersten Seildurchführung (10a) und der zweiten Seildurchführung (10b) jeweils an einer Vorderseite (6) des Grundmoduls (2) angeordnet sind.

13. Schlaufenbildner (1, 100) nach Anspruch 11 oder 12, **dadurch gekennzeichnet, dass** die erste Seildurchführung (10a) und die zweite Seildurchführung (10b) gegenläufig symmetrisch in dem Grundmodul (2) angeordnet sind.

14. Schlaufenbildner (100) nach einem der Ansprüche 11 bis 13, **dadurch gekennzeichnet, dass** das Grundmodul (2) ein Durchgangsloch (9) umschließt, welches zusätzlich zu den Seildurchführungen (10a, 10b) ausgebildet ist.

15. Drahtseilhalter (200), **gekennzeichnet durch** eine Seildurchführung (10a, 10b) nach einem der Ansprüche 1 bis 10.
